(19) **Europäisches Patentamt / European Patent Office / Office européen des brevets**

(11) **EP 4 618 491 A1**

(12) **EUROPEAN PATENT APPLICATION**
published in accordance with Art. 153(4) EPC

(43) Date of publication:
**17.09.2025 Bulletin 2025/38**

(21) Application number: **23896740.0**

(22) Date of filing: **27.11.2023**

(51) International Patent Classification (IPC):
**H04L 27/34** (2006.01)

(52) Cooperative Patent Classification (CPC):
**H04L 27/34; H04L 27/36**

(86) International application number:
**PCT/CN2023/134404**

(87) International publication number:
**WO 2024/114591 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.11.2022 CN 202211520120**

(71) Applicant: **ZTE Corporation
Shenzhen, Guangdong 518057 (CN)**

(72) Inventors:
- **YUAN, Zhifeng
  Shenzhen, Guangdong 518057 (CN)**
- **MA, Yihua
  Shenzhen, Guangdong 518057 (CN)**
- **LI, Zhigang
  Shenzhen, Guangdong 518057 (CN)**
- **LI, Weimin
  Shenzhen, Guangdong 518057 (CN)**

(74) Representative: **Savi, Massimiliano et al
Notarbartolo & Gervasi S.p.A.
Viale Achille Papa, 30
20149 Milano (IT)**

(54) **SIGNAL MODULATION METHOD, COMMUNICATION DEVICE, AND STORAGE MEDIUM**

(57) The present application provides a signal modulation method, a communication device, and a storage medium. The method comprises: modulating M + 2 pieces of bit information according to a first constellation diagram model. or modulating M + 3 pieces of bit information according to a second constellation diagram model, to obtain modulation symbols, wherein the first constellation diagram model comprises 4 * N constellation points, and the second constellation diagram model comprises 4 * N constellation points.

Modulate M+2 bits of information according to a first constellation diagram model, or modulate M+3 bits of information according to a second constellation diagram model, to obtain modulation symbols ⟶ S110

Fig. 2

EP 4 618 491 A1

**Description**

**CROSS-REFERENCE TO RELATED APPLICATION**

This application is filed on the basis of Chinese patent application No. 202211520120.5 filed November 30, 2022, and claims priority of the Chinese patent application, the entire contents of which are incorporated herein by reference.

**TECHNICAL FIELD**

Embodiments of the present disclosure relate to, but are not limited to, the technical field of communications, and in particular, to a signal modulation method, a communication device, and a storage medium.

**BACKGROUND**

Due to the rapid development of wireless communication technologies, in mobile network applications, the demand for business volume, the number of terminals and the types of terminals have shown an explosive growth trend. Therefore, it is necessary to improve the spectrum efficiency to solve the contradiction between the growing demand for wireless communication and limited spectrum resources. However, it is a conventional means to use high-order modulation methods to improve the spectrum efficiency. In related technologies, the high-order modulation methods usually include pulse amplitude modulation (PAM), phase-shift keying (PSK), and quadrature amplitude modulation (QAM). However, during the information transmission process, modulated transmission symbols will be distorted by channel interference, which reduces the demodulation performance on a receiving side. Therefore, the receiving side relies heavily on the pilot frequency to compensate for the distorted transmission symbols, but this will cause excessive pilot frequency overhead and reduce the transmission spectrum efficiency. Therefore, how to improve the demodulation performance on the receiving side is a problem that needs to be solved urgently.

**SUMMARY**

In accordance with some embodiments of the present disclosure, a signal modulation method, a communication device, and a storage medium are provided, which can improve the demodulation performance on a receiving side and reduce the pilot frequency overhead.

In accordance with an embodiment of the present disclosure in a first aspect, a signal modulation method is provided. The signal modulation method includes:

modulating M + 2 bits of information according to a first constellation diagram model, or modulating M + 3 bits of information according to a second constellation diagram model, to obtain modulation symbols, where the first constellation diagram model includes 4 $*$ $N$ constellation points, the second constellation diagram model includes 8 $*$ N constellation points, M is an integer greater than 1, and N and M satisfy a formula N = $2^M$;

a complex number form corresponding to the 4*N constellation points in the first constellation diagram model include the following:

$$a_1 e^{j\theta}, a_2 e^{j\theta}, \cdots, a_N e^{j\theta},$$

$$b_1 e^{j(\theta+\pi/2)}, b_2 e^{j(\theta+\pi/2)}, \cdots, b_N e^{j(\theta+\pi/2)},$$

$$a_1 e^{j(\theta+\pi)}, a_2 e^{j(\theta+\pi)}, \cdots, a_N e^{j(\theta+\pi)},$$

$$b_1 e^{j(\theta+3\pi/2)}, b_2 e^{j(\theta+3\pi/2)}, \cdots, b_N e^{j\left(\theta+\frac{3\pi}{2}\right)};$$

a complex number form corresponding to the 8*N constellation points in the second constellation diagram model include the following:

2

$$a_1 e^{j\theta}, a_2 e^{j\theta}, \cdots, a_N e^{j\theta},$$

$$b_1 e^{j\left(\theta+\frac{\pi}{4}\right)}, b_2 e^{j\left(\theta+\frac{\pi}{4}\right)}, \cdots, b_N e^{j\left(\theta+\frac{\pi}{4}\right)},$$

$$a_1 e^{j\left(\theta+\frac{\pi}{2}\right)}, a_2 e^{j\left(\theta+\frac{\pi}{2}\right)}, \cdots, a_N e^{j\left(\theta+\frac{\pi}{2}\right)},$$

$$b_1 e^{j\left(\theta+\frac{3\pi}{4}\right)}, b_2 e^{j\left(\theta+\frac{3\pi}{4}\right)}, \cdots, b_N e^{j\left(\theta+\frac{3\pi}{4}\right)},$$

$$a_1 e^{j(\theta+\pi)}, a_2 e^{j(\theta+\pi)}, \cdots, a_N e^{j(\theta+\pi)},$$

$$b_1 e^{j\left(\theta+\frac{5\pi}{4}\right)}, b_2 e^{j\left(\theta+\frac{5\pi}{4}\right)}, \cdots, b_N e^{j\left(\theta+\frac{5\pi}{4}\right)},$$

$$a_1 e^{j\left(\theta+\frac{3\pi}{2}\right)}, a_2 e^{j\left(\theta+\frac{3\pi}{2}\right)}, \cdots, a_N e^{j\left(\theta+\frac{3\pi}{2}\right)},$$

$$b_1 e^{j\left(\theta+\frac{7\pi}{4}\right)}, b_2 e^{j\left(\theta+\frac{7\pi}{4}\right)}, \cdots, b_N e^{j\left(\theta+\frac{7\pi}{4}\right)};$$

where $\pi$ is a symbol for Pi, j is an imaginary number, the value of j is equal to $\sqrt{-1}$, e is a natural logarithm, $\theta$ is a real number, $a_1, a_2, \cdots, a_N$ and $b_1, b_2, \cdots, b_N$ are all positive numbers and satisfy: $0 < a_1 < a_2 < \ldots < a_N$, $0 < b_1 < b_2 < \cdots < b_N$.

In accordance with an embodiment of the present disclosure in a second aspect, a communication device is further provided. The communication device includes at least one processor and at least one memory, where the memory is configured to store at least one program; and when executed by at least one of the processors, at least one of the programs implements the signal modulation method as described above.

In accordance with an embodiment of the present disclosure in a third aspect, a computer-readable storage medium is further provided. Computer-executable instructions are stored in the computer-readable storage medium, where the computer-executable instructions are configured to execute the signal modulation method as described above.

Embodiments of the present disclosure includes: modulating M + 2 bits of information according to a first constellation diagram model, or modulating M + 3 bits of information according to a second constellation diagram model, to obtain modulation symbols, where the first constellation diagram model includes 4 * N constellation points, the second constellation diagram model includes 8 * N constellation points, M is an integer greater than 1, and N and M satisfy a formula $N = 2^M$;

a complex number form corresponding to the 4*N constellation points in the first constellation diagram model includes the following:

$$a_1 e^{j\theta}, a_2 e^{j\theta}, \cdots, a_N e^{j\theta},$$

$$b_1 e^{j(\theta+\pi/2)}, b_2 e^{j(\theta+\pi/2)}, \cdots, b_N e^{j(\theta+\pi/2)},$$

$$a_1 e^{j(\theta+\pi)}, a_2 e^{j(\theta+\pi)}, \cdots, a_N e^{j(\theta+\pi)},$$

$$b_1 e^{j(\theta+3\pi/2)}, b_2 e^{j(\theta+3\pi/2)}, \cdots, b_N e^{j\left(\theta+\frac{3\pi}{2}\right)};$$

a complex number form corresponding to the 8*N constellation points in the second constellation diagram model includes the following:

$$a_1 e^{j\theta}, a_2 e^{j\theta}, \cdots, a_N e^{j\theta},$$

$$b_1 e^{j\left(\theta+\frac{\pi}{4}\right)}, b_2 e^{j\left(\theta+\frac{\pi}{4}\right)}, \cdots, b_N e^{j\left(\theta+\frac{\pi}{4}\right)},$$

$$a_1 e^{j\left(\theta+\frac{\pi}{2}\right)}, a_2 e^{j\left(\theta+\frac{\pi}{2}\right)}, \cdots, a_N e^{j\left(\theta+\frac{\pi}{2}\right)},$$

$$b_1 e^{j\left(\theta+\frac{3\pi}{4}\right)}, b_2 e^{j\left(\theta+\frac{3\pi}{4}\right)}, \cdots, b_N e^{j\left(\theta+\frac{3\pi}{4}\right)},$$

$$a_1 e^{j(\theta+\pi)}, a_2 e^{j(\theta+\pi)}, \cdots, a_N e^{j(\theta+\pi)},$$

$$b_1 e^{j\left(\theta+\frac{5\pi}{4}\right)}, b_2 e^{j\left(\theta+\frac{5\pi}{4}\right)}, \cdots, b_N e^{j\left(\theta+\frac{5\pi}{4}\right)},$$

$$a_1 e^{j\left(\theta+\frac{3\pi}{2}\right)}, a_2 e^{j\left(\theta+\frac{3\pi}{2}\right)}, \cdots, a_N e^{j\left(\theta+\frac{3\pi}{2}\right)},$$

$$b_1 e^{j\left(\theta+\frac{7\pi}{4}\right)}, b_2 e^{j\left(\theta+\frac{7\pi}{4}\right)}, \cdots, b_N e^{j\left(\theta+\frac{7\pi}{4}\right)};$$

where $\pi$ is a symbol for Pi, j is an imaginary number, the value of j is equal to $\sqrt{-1}$, e is a natural logarithm, $\theta$ is a real number; $a_1, a_2, \cdots, a_N$ and $b_1, b_2, \cdots, b_N$ are all positive numbers and satisfy: $0 < a_1 < a_2 < \cdots < a_N$, $0 < b_1 < b_2 < \cdots < b_N$. That is, multiple bits of information may be modulated to form a modulation symbol according to the first constellation diagram model or the second constellation diagram model, and a plurality of modulation symbols obtained through the first constellation diagram model or the second constellation diagram model can form a constellation diagram with a simple geometric shape. Therefore, after the modulation symbols are interfered by a channel to rotate and scale, the interfered constellation diagram still presents a simple geometric shape, which has high resistance to distortion interference in the transmission process and can be compensated only by shape characteristics of the constellation diagram, thereby restoring the demodulation performance without increasing the pilot frequency overhead and ensuring the high-frequency spectrum efficiency. Therefore, embodiments of the present disclosure can improve the demodulation performance on the receiving side while ensuring the high-frequency spectrum efficiency.

BRIEF DESCRIPTION OF DRAWINGS

Fig. 1(a) and Fig. 1(b) are constellation diagrams corresponding to 64QAM modulation symbols provided by one embodiment of the present disclosure;

Fig. 2 is a flowchart of an information modulation method provided by one embodiment of the present disclosure;

Fig. 3 is a schematic diagram of a first constellation diagram model provided by one embodiment of the present disclosure;

Fig. 4 is a schematic diagram of a cross-shaped constellation diagram before and after channel rotation and scaling provided by one embodiment of the present disclosure;

Fig. 5 is a schematic diagram of partition division on a two-dimensional plane coordinate system provided by one embodiment of the present disclosure;

Fig. 6 is a schematic diagram of partition division of a cross-shaped constellation diagram on a two-dimensional plane coordinate system provided by one embodiment of the present disclosure;

Fig. 7 is a schematic diagram of a second constellation diagram model provided by one embodiment of the present disclosure;

Fig. 8 is a schematic diagram of a cross-shaped constellation diagram provided by another embodiment of the present disclosure;

Fig. 9 is a schematic diagram of a cross-shaped constellation diagram provided by another embodiment of the present disclosure;

Fig. 10 is a schematic diagram of a cross-shaped constellation diagram provided by another embodiment of the present disclosure;

Fig. 11 is a schematic diagram of a cross-shaped constellation diagram provided by another embodiment of the present disclosure;

Fig. 12 is a schematic diagram of a second constellation diagram model provided by another embodiment of the present disclosure; and

Fig. 13 is a schematic structural diagram of a communication device provided by one embodiment of the present disclosure.

DETAILED DESCRIPTION

In order to make the objectives, technical solutions and advantages of the present disclosure more clearly understood, the present disclosure is further described in detail below in conjunction with the accompanying drawings and embodiments. It should be understood that the specific embodiments described herein are only used to explain the present disclosure and are not used to limit the present disclosure.

It should be noted that although a logical order is shown in the flowchart, in some cases, the steps shown or described may be performed in an order different from that in the flowchart. In the Specification, Claims and description of the above drawings, terms such as "a plurality of (multiple)" means more than two, "greater than", "less than", "exceed", and the like are understood as excluding the specified number, and "above", "below", "within" and the like are understood as including the specified number. If described as "first", "second", and the like, it is only used for the purpose of distinguishing technical features and cannot be understood as indicating or implying relative importance or implicitly indicating the number of the indicated technical features or implicitly indicating the order of the indicated technical features.

The present disclosure provides a signal modulation method, a communication device, and a storage medium. The signal modulation method includes: modulating M + 2 bits of information according to a first constellation diagram model, or modulating M + 3 bits of information according to a second constellation diagram model, to obtain modulation symbols, where the first constellation diagram model includes 4 $*$ N constellation points, the second constellation diagram model includes 8 $*$ N constellation points, M is an integer greater than 1, and N and M satisfying a formula $N = 2^M$.

The 4 $*$ N constellation points in the first constellation diagram model have a corresponding complex number form, including:

$$a_1 e^{j\theta}, a_2 e^{j\theta}, \cdots, a_N e^{j\theta},$$

$$b_1 e^{j(\theta+\pi/2)}, b_2 e^{j(\theta+\pi/2)}, \cdots, b_N e^{j(\theta+\pi/2)},$$

$$a_1 e^{j(\theta+\pi)}, a_2 e^{j(\theta+\pi)}, \cdots, a_N e^{j(\theta+\pi)},$$

$$b_1 e^{j(\theta+3\pi/2)}, b_2 e^{j(\theta+3\pi/2)}, \cdots, b_N e^{j\left(\theta+\frac{3\pi}{2}\right)};$$

The 8 * N constellation points in the second constellation diagram model have a corresponding complex number form, including:

$$a_1 e^{j\theta}, a_2 e^{j\theta}, \cdots, a_N e^{j\theta},$$

$$b_1 e^{j\left(\theta+\frac{\pi}{4}\right)}, b_2 e^{j\left(\theta+\frac{\pi}{4}\right)}, \cdots, b_N e^{j\left(\theta+\frac{\pi}{4}\right)},$$

$$a_1 e^{j\left(\theta+\frac{\pi}{2}\right)}, a_2 e^{j\left(\theta+\frac{\pi}{2}\right)}, \cdots, a_N e^{j\left(\theta+\frac{\pi}{2}\right)},$$

$$b_1 e^{j\left(\theta+\frac{3\pi}{4}\right)}, b_2 e^{j\left(\theta+\frac{3\pi}{4}\right)}, \cdots, b_N e^{j\left(\theta+\frac{3\pi}{4}\right)},$$

$$a_1 e^{j(\theta+\pi)}, a_2 e^{j(\theta+\pi)}, \cdots, a_N e^{j(\theta+\pi)},$$

$$b_1 e^{j\left(\theta+\frac{5\pi}{4}\right)}, b_2 e^{j\left(\theta+\frac{5\pi}{4}\right)}, \cdots, b_N e^{j\left(\theta+\frac{5\pi}{4}\right)},$$

$$a_1 e^{j\left(\theta+\frac{3\pi}{2}\right)}, a_2 e^{j\left(\theta+\frac{3\pi}{2}\right)}, \cdots, a_N e^{j\left(\theta+\frac{3\pi}{2}\right)},$$

$$b_1 e^{j\left(\theta+\frac{7\pi}{4}\right)}, b_2 e^{j\left(\theta+\frac{7\pi}{4}\right)}, \cdots, b_N e^{j\left(\theta+\frac{7\pi}{4}\right)};$$

Where, $\pi$ is a symbol for Pi, j is an imaginary number, the value of $j$ is equal to $\sqrt{-1}$, $e$ is a natural logarithm, $\theta$ is a real number, $a_1, a_2, \cdots, a_N$ and $b_1, b_2, \cdots, b_N$ are all positive numbers and satisfy: $0 < a_1 < a_2 \cdots < a_N$, $0 < b_1 < b_2 < \cdots < b_N$. That is, a plurality of bits of information may be modulated to form a modulation symbol according to the first constellation diagram model or the second constellation diagram model, and a plurality of modulation symbols obtained through the first constellation diagram model or the second constellation diagram model can form a constellation diagram with a simple geometric shape. Therefore, after the modulation symbols are interfered by a channel to rotate and scale, the interfered constellation diagram still presents a simple geometric shape, which has high resistance to distortion interference in the transmission process and can be compensated only by shape characteristics of the constellation diagram, thereby restoring the demodulation performance without increasing the pilot frequency overhead and ensuring the high-frequency spectrum efficiency. Therefore, embodiments of the present disclosure can improve the demodulation performance on the receiving side while ensuring the high-frequency spectrum efficiency.

Embodiments of the present disclosure are further described below in conjunction with the accompanying drawings.

In application scenarios that require higher spectrum efficiency, the spectrum efficiency can be improved by increasing the order of a modulation method. In related technologies, the commonly used high-order modulation method is quadrature amplitude modulation (QAM). For example, 16QAM, 32QAM, 64QAM, 256QAM and other modulation methods can be used. The constellation points in the constellation diagram are evenly distributed on a two-dimensional plane (i.e., a complex plane), so a two-dimensional signal space (i.e., a two-dimensional signal plane) of a complex signal can be fully utilized. Communication signals may usually be represented by a complex number at a baseband. That is, the communication signals may be divided into an I-path signal and a Q-path signal, where the I-path signal is a real part and the Q-path signal is an imaginary part. Therefore, the modulation symbol may also be represented by a complex number, that is, one modulation symbol may be represented by a complex number. For example, the modulation symbols may be represented as $a + j * b$, where j is an imaginary number, that is $j = sqrt(-1)$; a is a real part of s, indicating that the modulation symbol is transmitted on an I path, while b is an imaginary part of s, indicating that the modulation symbol is transmitted on a Q path.

In this embodiment, for 16QAM in the related technologies, its constellation diagram includes 16 points, and the complex number corresponding to these 16 points include the following:

*3 + 3j, 3 + j, 3 - j, 3 - 3j,*
*1 + 3j, 1 + j,1- j, 1 - 3j,*
*- 1 + 3j, - 1 + j, - 1 - j, - 1 - 3j,*
*-3 + 3j, -3 + j, -3 - j, - 3 - 3j.*

It could be seen that, in a two-dimensional plane (also called a complex plane, or a complex signal space, or a two-dimensional signal space) where the real part ranges from -3 to 3 and the imaginary part ranges from -3 to 3, the constellation points of 16QAM are distributed relatively evenly. It should be appreciated that the complex plane and the two-dimensional plane are equivalent, so the complex plane or the two-dimensional plane may also be called a two-dimensional complex plane, where the real part of the complex number is equivalent to a coordinate x of the two-dimensional plane, and the imaginary part of the complex number is equivalent to a coordinate y of the two-dimensional plane. Therefore, the complex numbers may also be represented by points on the two-dimensional plane. For example, the complex number $a + j * b$ may be represented by coordinates *(a, b)* on the two-dimensional plane, where the coordinates *(a, b)* represent that on the two-dimensional plane, the coordinate x is a and the coordinate is b. Therefore, the 16 points in the 16QAM constellation diagram may be represented by 16 two-dimensional coordinates on the two-dimensional plane in addition to being represented by 16 complex numbers, where the 16 two-dimensional coordinates include the following:

(3,3), (3,1), (3, -1), (3, -3),
(1,3), (1,1), (1, -1), (1, -3),
(-1,3), (-1,1), (-1, -1), (-1, -3),
(-3,3), (-3,1), (-3, -1), (-3, -3).

In this embodiment, in the case that the constellation diagram needs to be subjected to overall power normalization processing, the constellation diagram as a whole may be multiplied by a normalization factor (scaling factor). For example, the 16 complex numbers of 16QAM are all multiplied by the same normalization factor *1/sqrt(40).* The complex numbers corresponding to the 16 points included the 16QAM constellation diagram subjected to power normalization processing include the following:

*1/sqrt(40)* $*$ *[3 + 3j,3 + j,3 - j,3 - 3j,1 + 3j,1 + j,1 - j,1 - 3j, -1 + 3j, -1+ j,-1 - j, -1 - 3j, -3 + 3j, -3 + j, - 3 - j, - 3 - 3j].*

The coordinates corresponding to the 16 points included in the 16QAM constellation diagram subjected to power normalization processing may be obtained by multiplying the 16 two-dimensional coordinates listed above by *1/sqrt(40),* that is, multiplying the coordinate x and the coordinate y of each two-dimensional coordinate by *1/sqrt(40).*

It is worth noting that power normalization only reduces the overall size of the constellation diagram, and the constellation points in the reduced constellation diagram are still evenly distributed.

For other high-order modulation methods, such as 32QAM, 64QAM, 256QAM and other modulation methods, they are all similar to 16QAM. The constellation points of their constellation diagrams are evenly distributed on the two-dimensional plane. Therefore, the high-order modulation methods in related technologies can make full use of the two-dimensional signal space of the complex signals, and the demodulation methods corresponding to these high-order modulation methods are not only simple, but also can guarantee performances. Therefore, these high-order modulation methods can use a relatively simple and efficient method to approach the performance limit of transmission, namely the Shannon limit. Therefore, in scenarios having a certain demand for high spectrum efficiency, these high-order modulation methods can be widely used. However, these high-order modulation methods require relatively accurate channel estimation to ensure performances. If the channel estimation error is large, the constellation diagram will be distorted during demodulation (i.e., during information transmission), that is, rotated and scaled. A decision area based on which the receiving end demodulates the received transmission symbols is a uniform ring or sector shape, which does not match the actual distribution of the points corresponding to the received symbols. At this time, the demodulation performance will be greatly reduced, resulting in a high bit error rate and low data transmission accuracy.

Specifically, taking the transmission of a modulation symbol by means of orthogonal frequency division multiplexing (OFDM) as an example (i.e., using an OFDM subcarrier to transmit the modulation symbol), after passing through a multipath channel or a frequency-selective channel, the modulation symbol carried on the OFDM subcarrier will be weighted by a complex number weight by a channel, that is, the modulation symbol carried on the subcarrier will be distorted by the frequency-selective channel. Alternatively, if there is a synchronization error between a sender and a receiver, a timing deviation (i.e., time offset) and a frequency deviation (i.e., frequency offset) will also cause the modulation symbol on the subcarrier to be weighted with a complex number weight, that is, the modulation symbol will be distorted by the synchronization error. In high-speed mobile scenarios or satellite communication scenarios, the Doppler effect will also cause the modulation symbol on the subcarrier to be weighted with a complex number weight, that is, the modulation symbol will be distorted by the synchronization error.

In addition, the transmission of a modulation symbol by means of a single carrier is taken as an example, i.e., the modulation symbol is transmitted directly through a time domain symbol. In this scenario, in the case where a transceiver has frequency offset or phase noise, the modulation symbol is weighted with a complex number weight, that is, the modulation symbol is distorted due to frequency offset or phase noise.

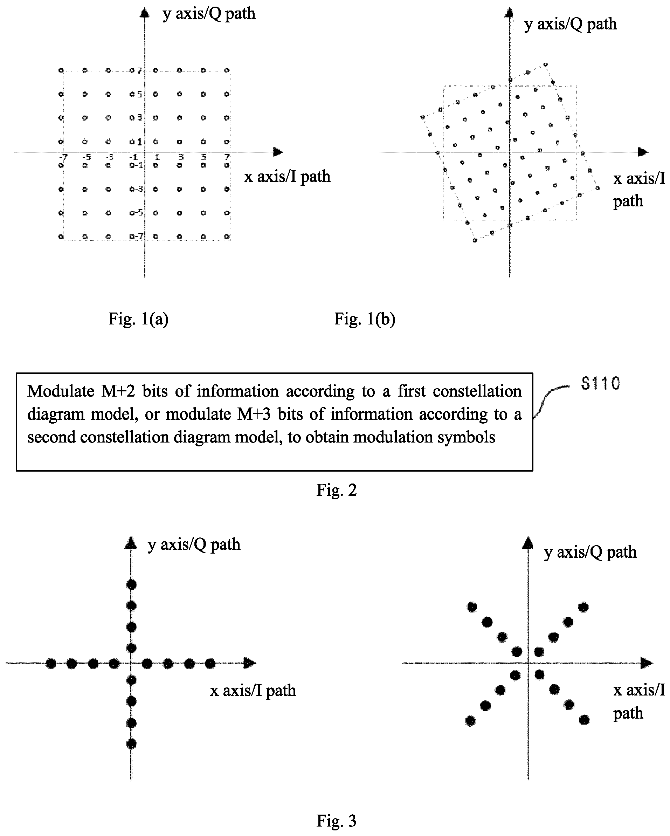

Furthermore, the distortions suffered by the modulation symbols is superimposed. Taking the modulation symbol s transmitted by means of OFDM as an example, it is assumed that, the complex number weight on the modulation symbol caused by the frequency-selective channel is $g_1$, and the complex number weight on the modulation symbols caused by the time offset or frequency offset is $g_2$. If the above-mentioned situation of frequency-selective channel and the above-mentioned situation synchronization error exist at the same time, the total distortion suffered by the modulation symbols may be represented by weighting the modulation symbol with a complex number weight h, where $h = g_1 * g_2$. That is, the received modulation symbol is $y = h * s + n = g_1 * g_2 * s + n$, where n is additive white Gaussian noise (AWGN). If the receiving side cannot remove the distortion on the modulation symbol, that is, cannot remove the complex number weight h on the modulation symbol by equalization, the modulation symbol will be rotated and scaled. The high-order modulation symbol that is slightly rotated and scaled will also seriously restrict the performances of the modulation method. As shown in Fig. 1, each small origin corresponds to one modulation symbol, where Fig. 1(a) is a constellation diagram corresponding to a standard 64QAM modulation symbol; and Fig. 1(b) is a constellation diagram corresponding to a 64QAM modulation symbol weighted by one weight (i.e., a rotation and scaling amount), that is, a constellation diagram corresponding to a 64QAM modulation symbol that has undergone channel distortion. If the receiving side directly demodulates such constellation diagram in Fig. 1(b), the demodulation performance will be affected even if the AWGN on the receiving side is small. Therefore, in traditional high spectrum efficiency scenarios, pilot frequencies (or reference signals) are usually used to estimate the complex number weight (i.e., distortion) of the modulation symbol. That is, h in the received modulation symbol $y = h * s = g_1 * g_2 * s + n$ is estimated, and then the complex number weight is removed by equalization, that is, y is divided by h, that is, $y/h = s + n/h$, to obtain a constellation diagram $s + n'$ that is not distorted and is only affected by AWGN, such that better demodulation performance can be obtained, where $n' = n/h$.

However, there are still some scenarios where the complex number weight (i.e., distortion) on the modulation symbol is hardly estimated accurately through pilot frequency signals. For example, in connectionless transmission or scheduling-free transmission scenarios, since the pilot frequency signals or reference signals are selected and set based on terminal requirements, different terminals may select the same pilot frequency or the same reference signal, resulting in pilot frequency collision or reference signal collision. In the case of high overload, that is, when the number of terminals is large, the probability of pilot frequency collision or reference signal collision is high. Once the pilot frequency collision or reference signal collision occurs, it is difficult for the receiving side, such as a base station or receiver, to accurately estimate the complex number weight (i.e., distortion) on the modulation symbol through the pilot frequency or reference signal.

In addition, in scenarios with large synchronization errors, high-speed mobile scenarios, satellite communication scenarios, or scenarios with large phase noise, the rotation and scaling amount of the modulation symbol changes rapidly, so it is necessary to use pilot frequencies with very short time intervals to estimate the rotation and scaling amount of the modulation symbol between the pilot frequencies. The estimation accuracy is limited to cause excessive pilot frequency overhead, which will reduce the transmission spectrum efficiency. On the other hand, if the density of the pilot frequencies in time is insufficient, it is difficult to accurately estimate the rotation and scaling amount on the modulation symbol, that is, the demodulation performance is impaired.

In scenarios where pilot frequency channel estimation is limited, such as connectionless output transmission scenarios, scenarios with large synchronization errors, high-speed mobile scenarios, satellite communication scenarios, or scenarios with large phase noise, the receiving side can improve the data transmission performance by extracting channel information from the modulation symbol. However, the constellation diagrams in the traditional high-order modulation method are too dense, which is not conducive to the receiving side to extract channel information through the modulation symbols. Therefore, the present disclosure proposes a signal modulation method, which makes a modulation symbol robust to distortion interference in the transmission process. At the same time, when the degree of modulation symbol distortion is high, it can be compensated only by modulating shape characteristics of a constellation diagram itself, thereby ensuring high spectrum frequency without increasing the pilot frequency overhead to restore the demodulation performance. Therefore, the embodiments of the present disclosure can support an application scenario requiring high spectrum effect and also enable the receiving side to extract channel information through modulation symbols more easily and accurately.

Referring to Fig. 2, which is a flowchart of a signal modulation method provided by one embodiment of the present disclosure. The signal modulation method may include but is not limited to step S110.

At step S110, $M + 2$ bits of information are modulated according to a first constellation diagram model, or $M + 3$ bits of information are modulated according to a second constellation diagram model, to obtain modulation symbols.

In an embodiment, M + 2 bits of information are modulated according to a first constellation diagram model, or $M +$ 3 bits of information are modulated according to a second constellation diagram model, to obtain modulation symbols, where the first constellation diagram model includes 4 ∗ N constellation points, the second constellation diagram model includes 8 ∗ N constellation points, M is an integer greater than 1, and N and M satisfying a formula N = $2^M$;

a complex number form corresponding to the 4 ∗ N constellation points in the first constellation diagram model include the following:

$$a_1 e^{j\theta}, a_2 e^{j\theta}, \cdots, a_N e^{j\theta},$$

$$b_1 e^{j(\theta+\pi/2)}, b_2 e^{j(\theta+\pi/2)}, \cdots, b_N e^{j(\theta+\pi/2)},$$

$$a_1 e^{j(\theta+\pi)}, a_2 e^{j(\theta+\pi)}, \cdots, a_N e^{j(\theta+\pi)},$$

$$b_1 e^{j(\theta+3\pi/2)}, b_2 e^{j(\theta+3\pi/2)}, \cdots, b_N e^{j\left(\theta+\frac{3\pi}{2}\right)};$$

a complex number form corresponding to the 8 ∗ N constellation points in the second constellation diagram model include the following:

$$a_1 e^{j\theta}, a_2 e^{j\theta}, \cdots, a_N e^{j\theta},$$

$$b_1 e^{j\left(\theta+\frac{\pi}{4}\right)}, b_2 e^{j\left(\theta+\frac{\pi}{4}\right)}, \cdots, b_N e^{j\left(\theta+\frac{\pi}{4}\right)},$$

$$a_1 e^{j\left(\theta+\frac{\pi}{2}\right)}, a_2 e^{j\left(\theta+\frac{\pi}{2}\right)}, \cdots, a_N e^{j\left(\theta+\frac{\pi}{2}\right)},$$

$$b_1 e^{j\left(\theta+\frac{3\pi}{4}\right)}, b_2 e^{j\left(\theta+\frac{3\pi}{4}\right)}, \cdots, b_N e^{j\left(\theta+\frac{3\pi}{4}\right)},$$

$$a_1 e^{j(\theta+\pi)}, a_2 e^{j(\theta+\pi)}, \cdots, a_N e^{j(\theta+\pi)},$$

$$b_1 e^{j\left(\theta+\frac{5\pi}{4}\right)}, b_2 e^{j\left(\theta+\frac{5\pi}{4}\right)}, \cdots, b_N e^{j\left(\theta+\frac{5\pi}{4}\right)},$$

$$a_1 e^{j\left(\theta+\frac{3\pi}{2}\right)}, a_2 e^{j\left(\theta+\frac{3\pi}{2}\right)}, \cdots, a_N e^{j\left(\theta+\frac{3\pi}{2}\right)},$$

$$b_1 e^{j\left(\theta+\frac{7\pi}{4}\right)}, b_2 e^{j\left(\theta+\frac{7\pi}{4}\right)}, \cdots, b_N e^{j\left(\theta+\frac{7\pi}{4}\right)};$$

where $\pi$ is a symbol for Pi, j is an imaginary number, the value of j is equal to $\sqrt{-1}$, e is a natural logarithm, $\theta$ is a real number; $a_1, a_2, \cdots, a_N$ and $b_1, b_2, \cdots, b_N$ are all positive numbers and satisfy: $0 < a_1 < a_2 < \cdots < a_N$, $0 < b_1 < b_2 < \cdots < b_N$.

In this embodiment, by using the information modulation method including the above-mentioned step S110, the modulation symbols may be obtained by modulating multiple bits of information in an information packet according to the first constellation diagram model or the second constellation diagram model, that is, the modulation symbols may carry multiple bits of information, thereby realizing high-order modulation. In addition, the modulation symbols modulated according to the first constellation diagram model or the second constellation diagram model can improve the robustness against distortion interference in the transmission process. At the same time, in the case of a high degree of modulation symbol distortion, it can be compensated only by modulating the shape characteristics of the constellation diagram itself, thereby ensuring high-frequency spectrum efficiency without increasing the pilot frequency overhead to restore the demodulation performance. Therefore, embodiments of the present disclosure can support an application scenario requiring high spectrum effect and also enable the receiving side to extract channel information through the modulation symbols more easily and accurately.

In an embodiment, each of $a_1$, $a_2$, $\cdots$, $a_N$ may be expressed by formula (1), that is

$$a_n = (2n - 1 + \Delta)d; \qquad (1)$$

each of $b_1$, $b_2$, $\cdots$, $b_N$ may be expressed by formula (2):

$$b_n = a_n + \beta; \qquad (2).$$

It should be appreciated that the values of n include 1,2, $\cdots$ , N, that is, $a_n$ may be expressed as $a_1$, $a_2$, $\cdots$ , $a_N$; $b_n$ may also be expressed accordingly as $b_1$, $b_2$, $\cdots$, $b_N$, that is, $a_n$ may be expressed as a general formula of $a_1$, $a_2$, $\cdots$ , $a_N$; and aa$a_n$ may be a$a_1$, $a_2$, $a_3$, or the like. Similarly, $b_n$ is expressed as a general formula of $b_1$, $b_2$, $\cdots$ , $b_N$, that is, $b_n$ may be $b_1$, $b_2$, $b_3$, or the like.

In formula (1) and formula (2), d is a positive real number, and $\Delta$ and $\beta$ are real numbers greater than or equal to 0, such that $a_1$, $a_2$, $\cdots$, $a_N$ constitute an arithmetic progression and $b_1$, $b_2$, $\cdots$ , $b_N$ constitute an arithmetic progression.

In an embodiment, the value of $\Delta$ may be expressed by formula (3), that is,

$$\Delta = \sqrt{2} - 1; \qquad (3).$$

In an embodiment, when the value of d is 1, it can be made that $a_n$ satisfies $a_n$ = 2n - 2 + $\sqrt{2}$ . Alternatively, when the value of $d$ is 1/2, it can be made that $a_n$ satisfies $a_n = n - 1 + \sqrt{2}/2$ . The embodiment of the present disclosure does not impose any specific restriction on the value of d.

In an embodiment, when the value of $\Delta$ is 1 and the value of d is 1/2, it can be made that $a_n$ satisfies $a_n$ = n.

In an embodiment, when the value of $\Delta$ is 3 and the value of d is 1/2, it can be made that $a_n$ satisfies $a_n$ = n + 1.

In an embodiment, when the value of $\Delta$ is 0 and the value of d is 1, it can be made that $a_n$ satisfies $a_n$ = 2n - 1.

In an embodiment, $\beta$ is equal to zero.

In an embodiment, when the modulation symbol is modulated according to the second constellation diagram model, $\beta$ is greater than 0.

In an embodiment, when the modulation symbol is modulated according to the first constellation diagram model, the value of d is a numerical value that makes the average power of the modulation symbol modulated by using the first constellation diagram model be equal to 1. It should be appreciated that the value of d is a numerical value that makes the average power of the modulation symbol modulated by the first constellation diagram model be equal to 1, that is, the value of $d$ makes the mean of the square of the modulus of the constellation points in the first constellation diagram model be equal to 1, that is, the value of d makes the average power of the first constellation diagram model be equal to 1, which will not be specifically limited herein.

In an embodiment, when the modulation symbol is modulated according to the second constellation diagram model, the value of d is a numerical value that makes the average power of the modulation symbol modulated by the second constellation model be equal to 1. It should be appreciated that the value of d is a numerical value that makes the average power of the modulation symbol modulated by the second constellation diagram model be equal to 1, that is, the value of $d$ makes the mean of the square of the modulus of the constellation points in the second constellation diagram model be equal to 1, that is, the value of d makes the average power of the second constellation diagram model be equal to 1, which will not be specifically limited herein.

In an embodiment, the value of $\theta$ is 0; or, the value of $\theta$ is $\pi/4$, which satisfies the formula $\theta = \pi/4$; or, the value of $\theta$ is $\pi/8$, which satisfies the formula $\theta = \pi/8$, which will not be specifically limited herein.

In an embodiment, M is an integer greater than 1, and $N$ and M satisfy the formula $N = 2^M$. The embodiment of the present disclosure does not impose any specific limitation on the value of M.

When the value of $M$ is 2, the modulation symbol is obtained by modulating 4 (i.e., $M$ + 2 = 4) bits of information according to the first constellation diagram model. It can be seen from N = $2^M$ that when M = 2 and N = 4, that is, the first constellation diagram model includes 16 (i.e., 4 $*$ N = 16) constellation points. Alternatively, the modulation symbol is obtained by modulating 5 (i.e., M+3 = 5) bits of information according to the second constellation diagram model, and the second constellation diagram model includes 32 (i.e., 8 $*$ $N$ = 32) constellation points.

When the value of $M$ is 3, the modulation symbol is obtained by modulating 5 (i.e., $M + 2$ = 5) bits of information according to the first constellation diagram model. It can be seen from N = $2^M$ that when $M$ = 3 and $N$ = 8, that is, the first constellation diagram model includes 32 (i.e., 4 $*$ $N$ = 32) constellation points. Alternatively, the modulation symbol is obtained by modulating 6 (i.e., $M + 3$ = 6) bits of information according to the second constellation diagram model, and the second constellation diagram model includes 64 (i.e., 8$*$ $N$ = 64) constellation points.

It should be appreciated that each modulation symbol (that is, each constellation point) may carry multiple bits of information, thereby achieving a high-order modulation effect, which is conducive to achieving high spectrum efficiency.

As shown in Fig. 3, Fig. 3 is a schematic diagram of a first constellation diagram model provided by one embodiment of the present disclosure. In an embodiment, the first constellation diagram model may be a cross-shaped constellation diagram corresponding to the diagram on the left in Fig. 3 or a cross-shaped constellation diagram corresponding to the diagram on the right, where the cross-shaped constellation diagram is a constellation diagram in which half of the constellation points are located on a straight line passing through a zero point (i.e., origin), the other half of the constellation points are located on another straight line passing through the zero point (i.e., origin), and the two straight lines are perpendicular to each other. The cross-shaped constellation diagram has the advantages of high spectrum efficiency, simple geometric shape, etc. Specifically, the cross-shaped constellation diagram shown in Fig. 3 is a constellation diagram in a two-dimensional signal plane. These cross-shaped constellation diagrams each include 16 constellation points, each of which corresponds to one modulation symbol, and each modulation symbol may carry 4 bits of information, that is, 4 bits of information will be mapped (i.e., modulated) into one modulation symbol. The constellation points in the cross-shaped constellation diagram shown on the left side of Fig. 3 are distributed on an x axis (i.e., I path) and a y axis (i.e., Q path). The constellation points in the cross-shaped constellation diagram on the right side of Fig. 3 are respectively distributed on a straight line passing through the origin in the direction of 45° and a straight line passing through the origin in the direction of 135°. The cross-shaped constellation diagram shown on the right side of Fig. 3 may be formed by rotating the cross-shaped constellation diagram shown on the left side of Fig. 3 by 45°. In fact, the constellation diagram model shown on the left side of Fig. 3 corresponds to the first constellation diagram model in which a value of $\theta$ is 0. The constellation diagram model shown on the right side of Fig. 3 corresponds to the first constellation diagram model in which the value of $\theta$ is $\pi/4$. It should be appreciated that the first constellation diagram model may also be other cross-shaped constellation diagrams besides the cross-shaped constellation diagrams shown on the left side and the right side in Fig. 3. The embodiment of the present disclosure does not impose any specific limitation on the first constellation diagram model.

In detail, each modulation symbol (i.e., each constellation point) may carry multiple bits of information, which means that the high-order modulation effect can be achieved, thereby achieving high spectrum efficiency. In an embodiment, each modulation symbol may carry 4 bits of information, that is, 4 bits of information will be mapped (i.e., modulated) into one modulation symbol. In another embodiment, each modulation symbol may carry 5 bits, that is, 5 bits of information are mapped (i.e., modulated) into one modulation symbol.

It should be appreciated that the cross-shaped constellation diagram corresponding to the modulation symbols has the advantage of a simple geometric shape. Even if the modulation symbol received by the receiving side has been rotated and scaled by a channel, the constellation diagram corresponding to the modulation symbols is only a cross-shaped constellation diagram that has been rotated and scaled, and the formed geometric shape is still relatively simple.

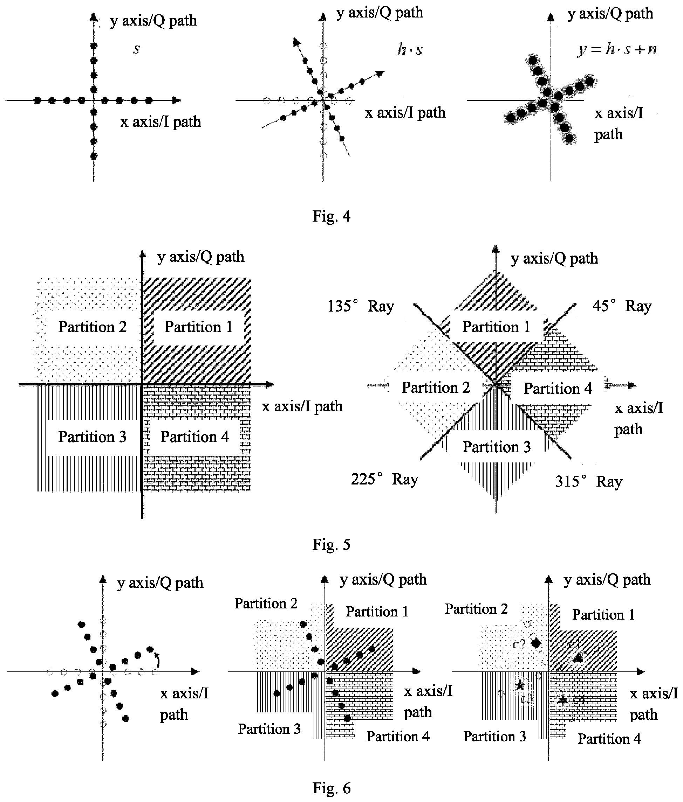

As shown in Fig. 4, Fig. 4 is a schematic diagram of a cross-shaped constellation diagram before and after channel rotation and scaling, where the diagram on the left side of Fig. 4 is a schematic diagram of a cross-shaped constellation diagram corresponding to the transmitted modulation symbol s (i.e., the modulation symbol s that has not undergone channel rotation and scaling), and the diagram in the middle of Fig. 4 is a schematic diagram of a cross-shaped constellation diagram corresponding to the modulation symbol $h*s$ received by the receiving side after rotation and scaling (i.e., $h$ is multiplied by s, which may also be expressed as $h \cdot s$ or $hs$), where the complex number $h$ is the rotation and scaling amount.

It is worth noting that the middle diagram in Fig. 4 is a schematic diagram of a cross-shaped constellation diagram corresponding to a received modulation symbol without AWGN (i.e., a modulation symbol received by the receiving side after rotation and scaling), and the diagram on the right side of Fig. 4 is a schematic diagram of a cross-shaped constellation diagram corresponding to a received modulation symbol ($y = h*s + n)$ with AWGN. It should be appreciated that the constellation diagram on the right side of Fig. 4 may be formed by adding the complex number corresponding to AWGN to the constellation points in the constellation diagram shown in the middle of Fig. 4. That is, the constellation points corresponding to the received modulation symbol ($y = h*s +$ n) with AWGN may be distributed around the constellation point ($h*$s) corresponding to the constellation diagram shown in the middle of Fig. 4 according to the probability density of AWGN. In the constellation diagram shown on the right side of Fig. 4, the colors of the constellation points change from dark to light from the middle to the edge, and the constellation points are a set of points formed when the corresponding modulation symbols are affected by AWGN. It can also be seen from the constellation diagram shown on the right side of Fig. 4 that, even if AWGN exists, the general shape of the cross-shaped constellation diagram corresponding to the received modulation symbol is still cross-shaped. Therefore, the receiving side may estimate the rotation and scaling amount applied to this constellation diagram (i.e., estimate h) by using the geometric shape of the cross-shaped constellation diagram as shown on the right side of Fig. 4.

The following is a detailed description of an estimation method for a rotation and scaling amount.

As shown in Fig. 5, first, a two-dimensional plane (i.e., a two-dimensional signal plane) may be divided into 4 partitions by using two typical methods. Specifically, as shown on the left side of Fig. 5, in the first partitioning method, 4 quadrants are taken as 4 partitions, that is, an axis x and an axis y are used as partition lines, where an area filled with oblique lines is a partition 1, an area filled with fine dots is a partition 2, an area filled with vertical lines is a partition 3, and an area filled with bricks is a partition 4. As shown on the right side of Fig. 5 , 4 partitions in the second partitioning method are formed by rotating 4 partitions in the first partitioning method by 45°, that is, an area enclosed by a 45° ray emitted from the origin to a 135° ray emitted from the origin is a partition 1, where the partition 1 is filled with oblique lines; an area from the 135° ray emitted from the origin to a 225° ray emitted from the origin is a partition 2, where the partition 2 is filled with fine dots; an area from the 225° ray emitted from the origin to a 315° ray emitted from the origin is a partition 3, where the partition 3 is filled with vertical lines; and an area from the 315° ray emitted from the origin to the 45° ray emitted from the origin is a partition 4, where the partition 4 is filled with bricks. The two partitioning methods shown in Fig. 5 are used to determine the partition to which a constellation point belongs. It is only necessary to perform some simple addition and subtraction on the coordinates of the constellation point to determine the specific partition to which this constellation point belongs, without the need for complex multiplication operations. It can be seen that the determination method is simple. In addition to the above two partitioning methods, other partitioning methods may be selected to divide the two-dimensional plane into 4 partitions, which will not be specifically limited in the present disclosure.

As shown in Figs. 3 to 6, after the two-dimensional signal plane is divided into 4 partitions on the receiving side, the constellation points in each partition (i.e., the modulation symbols corresponding to each constellation point) are added up and then divided by the number of constellation points in this partition (i.e., the number of modulation symbols). Then, a coordinate can be calculated, which is the center of the constellation point in this partition. The cross-shaped constellation diagram shown in the middle of Fig. 6 is a schematic diagram of a constellation diagram formed by rotating and scaling the cross-shaped constellation diagram shown on the left side of Fig. 4.

Taking the partition shown on the left side in Fig. 5 as an example, after partitioning, all constellation points are divided into 4 parts. As shown in the middle and on the right side of Fig. 6, the constellation points in the partition 1 are added up and then divided by the number of constellation points in this partition to obtain a center c1 of the constellation points in the partition 1, that is, a position of a triangle shown on the right side in Fig. 6. Similarly, the constellation points in the partition 2 are added up and then divided by the number of constellation points in this partition to obtain a center c2 of the constellation points in the partition 2, that is, a position of a quadrilateral shown on the right side of Fig. 6. The constellation points in the partition 3 are added up and then divided by the number of constellation points in this partition to obtain a center c3 of the constellation points in the partition 3, i.e., a position of a five-pointed star shown on the right side of Fig. 6. The constellation points in the partition 4 are added up and then divided by the number of constellation points in this partition to obtain a center c4 of the constellation points in the partition 4, i.e., a position of a six-pointed star shown on the right side of Fig. 6.

As shown in Fig. 5 and Fig. 6, the rotation and scaling amount of the entire constellation diagram may be obtained according to the centers of the constellation points in all partitions. Specifically, taking a partitioning method shown in Fig. 6 as an example, it is assumed that the centers of the constellation points in the calculated 4 partitions are $c1$, $c2$, $c3$, and $c4$, respectively. $c2'$, is obtained by rotating the center $c2$ of the constellation points in the partition 2 by 90° clockwise, i.e., $c2' = c2 * (-j)$. $c3'$ is obtained by rotating the center $c3$ of the constellation points in the partition 3 by 180° clockwise, i.e., $c3' = -c3$. $c4'$ is obtained by rotating the center c4 of the constellation points in the partition 4 by 90° counterclockwise, i.e., $c4' = c4 * j$. Then, the rotation and scaling amount c suffered by the whole constellation diagram may be estimated according to c1, c2', c 3', and c4', where this rotation and scaling amount c may be expressed by the following formula (4), i.e.:

$$c = (c1 + c2' + c3' + c4')/4 \qquad\qquad (4).$$

In the presence of AWGN, especially in the case where some modulation symbols are subject to large AWGN, some modulation symbols may be switched over areas. In order to estimate the rotation and scaling amount more accurately, two partitioning methods as shown in Fig. 5 are usually required. For the two partitioning methods, the two rotation and scaling amounts of the constellation diagram are calculated according to the above estimation method respectively, and then the rotation and scaling amount having a larger module value among the two rotation and scaling amounts is used as the rotation and scaling amount of this constellation diagram.

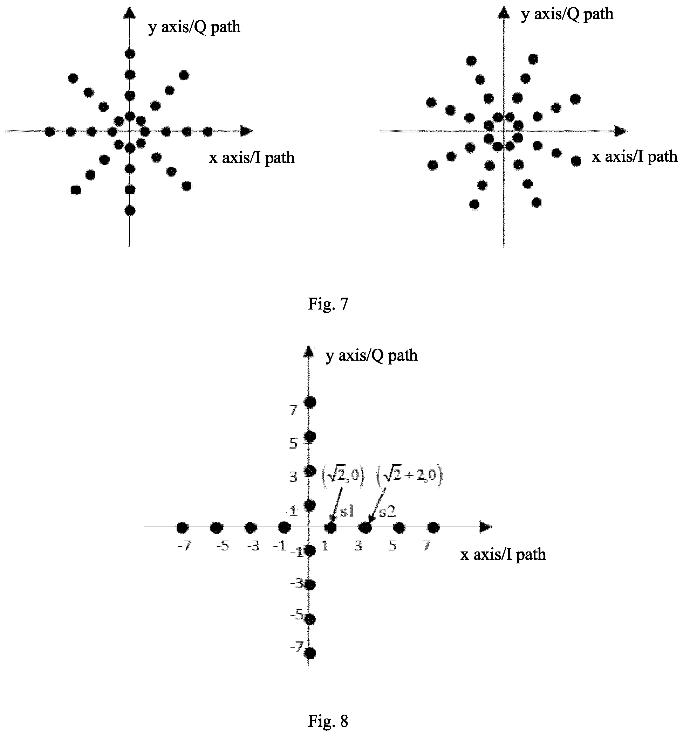

As shown in Fig. 7, Fig. 7 is a schematic diagram of a second constellation diagram model provided by one embodiment of the present disclosure. In an embodiment, the second constellation diagram model may be a star-shaped constellation diagram corresponding to the left side of Fig. 7 or a star-shaped constellation diagram corresponding to the right side. In fact, the constellation diagram model shown on the left side of Fig. 7 corresponds to the second constellation diagram model in which a value of $\theta$ is 0, while the constellation diagram model shown on the right side of Fig. 7 corresponds to the second constellation diagram model in which a value of $\theta$ is $\pi/8$. The star-shaped constellation diagram shown on the left or right side of Fig. 7 may be obtained by superimposing two cross-shaped constellation diagrams that are rotated by 45° relative to each other. Therefore, the second constellation diagram model shown in Fig. 7 can achieve higher spectrum effect and has the characteristic of a simple geometric shape, such that the rotation and scaling amount of the constellation diagram can be extracted by a simple method.

The rotation and scaling amount of the second constellation diagram model may be estimated by the following partitioning method. First, a two-dimensional plane (i.e., a two-dimensional signal plane) is divided into 8 partitions. Specifically, each of four quadrants is further equally divided into two partitions, where a ray from a zero point (i.e., origin) to 0° to a ray from the zero point (i.e., origin) to 45° is taken as a partition 1. The ray from the zero point (i.e., origin) to the 45° to a ray from the zero point (i.e., origin) to the 90° is taken as a partition 2. The ray from the zero point (i.e., origin) to 90° to a ray from the zero point (i.e., origin) to 135° is taken as a partition 3. The ray from the zero point (i.e., origin) to 135° and a ray from the zero point (i.e., origin) to 180° is taken as a partition 4. The ray from the zero point (i.e., origin) to the 180° to a ray from the zero point (i.e., origin) to 225° is taken as a partition 5. The ray from the zero point (i.e., origin) to 225° and a ray from the zero point (i.e., origin) to 270° is taken as a partition 6. The ray from the zero point (i.e., origin) to the 270° to a ray from the zero point (i.e., origin) to 315° is taken as a partition 7. The ray from the zero point (i.e., origin) to 315° and a ray from the zero point (i.e., origin) to 360° is taken as a partition 8.

Through the above partitioning method, after the two-dimensional signal plane is divided into a plurality of partitions on the receiving side, the constellation points (i.e., the modulation symbol corresponding to each constellation point) in each partition are added up respectively, and then divided by the number of constellation points in this partition (i.e., the number of modulation symbols), and then a coordinate may be calculated. This coordinate is the center of the constellation points in this partition. That is, the partition to which each constellation point belongs can be determined by only performing some simple addition and subtraction on the coordinates of the constellation points, without the need for complex multiplication operations, thereby achieving a simple effect. In addition, a simple operation is performed on the center of the constellation points in each partition to obtain the rotation and scaling amount of the constellation diagram, that is, the rotation and scaling amount experienced by all modulation symbols.

It should be appreciated that the rotation and scaling amount of the modulation symbol includes a rotation amount and a scaling amount.

Therefore, a plurality of modulation symbols obtained through the first constellation diagram model or the second constellation diagram model can form a constellation diagram with a simple geometric shape. After the modulation symbols are distorted by rotation and scaling due to channel interference, the formed constellation diagram still presents a simple geometric shape, which has high resistance to distortion interference in the transmission process, and the distortion can be estimated only through the shape characteristics of the constellation diagram, and then compensated, thereby ensuring high spectrum efficiency without the need to increase the pilot frequency overhead to restore the demodulation performance. Therefore, the embodiments of the present disclosure can improve the demodulation performance on the receiving side while ensuring high spectrum efficiency.

The information modulation method provided in the above embodiment is described in detail below with the following specific examples.

Example 1

Referring to Fig. 4, a cross-shaped constellation diagram in Fig. 4 may be divided into two parts, and the constellation points in each part are located on a straight line passing through the zero point (i.e., origin). For example, as shown in the cross-shaped constellation diagram on the left side of Fig. 4, half of the constellation points fall on a straight line of an x axis, and the other half of the constellation points fall on a straight line of a y axis. For another example, in the cross-shaped constellation diagram shown in the middle of Fig. 4, half of the constellation points fall on a straight line passing through the zero point (i.e., origin) at a certain angle $\alpha°$ to a positive semi-axis of the x axis, and the other half of the constellation points fall on a straight line passing through the zero point (i.e., origin) at an angle $(\alpha + 90)°$ to the positive semi-axis of the x axis. A numerical value of the angle $\alpha°$ is equal to an angle value of a complex weighted value corresponding to the channel distortion.

Specifically, if the distances between adjacent constellation points on a straight line passing through the origin are equal, and the distance between two adjacent points is set to 2d, among the 4 constellation points closest to the origin, the distance between adjacent constellation points is only $\sqrt{2}d$ . That is, among the 4 constellation points closest to the origin, the distance between adjacent constellation points will be smaller than the distance between adjacent constellation points on the same straight line, that is, the 4 constellation points closest to the origin are more densely distributed. Therefore, the constellation diagram is more susceptible to AWGN interference, which will lead to a decrease in demodulation performance.

In addition, the cross-shaped constellation diagram may be divided into 4 parts. For example, in the cross-shaped constellation diagram corresponding to the left side of Fig. 4, the constellation points in the cross-shaped constellation diagram corresponding to the left diagram of Fig. 4 may be divided into 4 parts according to the partition form shown on the right diagram of Fig. 5, where the first part of the constellation points are constellation points on the x axis that are greater than 0, that is, constellation points falling on the positive semi-axis of the axis, where the first part corresponds to the partition 4 in the right diagram of Fig. 5. The second part of the constellation points are constellation points on the x axis that are less than 0, that is, constellation points falling on a negative semi-axis of the x axis, where the second part corresponds to the partition 2 in the right diagram of Fig. 5. The third part of the constellation points are constellation points on the y axis that are greater than 0, that is, constellation points falling on a positive semi-axis of the y axis, where the third part corresponds to the partition 1 in the right diagram of Fig. 5. The fourth part of the constellation points are constellation points on the y axis that are less than 0, that is, constellation points falling on a negative semi-axis of the y axis, where the fourth part corresponds to the partition 3 in the right diagram of Fig. 5.

Further, in order to avoid the above problem (i.e., among the 4 constellation points closest to the origin, the distance between adjacent constellation points will be smaller than the distance between adjacent constellation points on the same straight line), an offset $\Delta$ greater than 0 may be added to the constellation points of the 4 parts of the cross-shaped constellation diagram respectively, such that among the 4 constellation points closest to the origin, a minimum distance between adjacent constellation points is equal to the distance between adjacent constellation points on the same straight line. That is, the constellation points in the 4 parts are all offset in a direction away from the origin, so as to avoid the 4 constellation points closest to the origin being densely distributed, thereby improving the demodulation performance.

Specifically, in the case of $a_n = (2n - 1 + \Delta)d$, the value of $\Delta$ may be $\sqrt{2} - 1$, while $a_n = \left(2n - 1 + \sqrt{2} - 1\right)d = \left(2n - 2 + \sqrt{2}\right)d$, the coordinates of the 4 constellation points closest to the origin are $\left(\sqrt{2}d, 0\right), \left(0, \sqrt{2}d\right), \left(-\sqrt{2}d, 0\right), \left(0, -\sqrt{2}d\right)$, so the distances between adjacent constellation points in the 4 constellation points closest to the origin are all 2d, and the distance between adjacent constellation points on the same straight line is also 2d. That is, among the 4 constellation points closest to the origin, the distance between adjacent constellation points is equal to the distance between adjacent constellation points on the same straight line in each part. The method of respectively adding the offset $\Delta$ greater than 0 to the constellation points of the 4 parts of the cross-shaped constellation diagram will increase the average power of the cross-shaped constellation diagram.

Alternatively, the constellation points in the 4 parts of this cross-shaped constellation diagram may not be added with an offset $\Delta$ greater than 0, that is, the offset of the constellation points in each part of the cross-shaped constellation diagram is 0. Therefore, the average power of the constellation diagram added with no offset $\Delta$ is smaller than the average power of the cross-shaped constellation diagram added with an offset $\Delta$ greater than 0. Specifically, in the case of $a_n = (2n - 1 + \Delta)d$, the value of $\Delta$ may be 0, while $a_n = (2n - 1)d$, the coordinates of the 4 constellation points closest to the origin are (d, 0), (0, d), (-d, 0), (0, -d). The distances between adjacent constellation points are $\sqrt{2}d$, while the distances between adjacent constellation points on the same straight line are 2d. That is, among the 4 constellation points closest to the origin, the distance between adjacent constellation points is smaller than the distance between adjacent constellation points on the same straight line in each part.

It should be appreciated that, in order to improve the transmission performance of the 4 constellation points closest to the origin in the cross-shaped constellation diagram, the distance between adjacent constellation points among the 4 constellation points closest to the origin can be increased, such that the formed cross-shaped constellation diagram expands outward to avoid the 4 constellation points closest to the origin from being distributed too densely, thereby reducing the impact of AWGN on the constellation points (i.e., modulation symbols) and improving the robustness of the cross-shaped constellation diagram.

For example, it can be set that $a_n = nd$, where d is a positive real number, such that among the 4 constellation points closest to the origin, the distance between adjacent constellation points is $\sqrt{2}d$, and the distance between adjacent constellation points on the same straight line of each part is d. That is, among the 4 constellation points closest to the origin, the distance between adjacent constellation points is greater than the distance between adjacent constellation points on the same straight line of each part. That is, the constellation points of the 4 parts are all offset in a direction away from the origin, so as to reduce the impact of AWGN on the constellation points (that is, modulation symbols), thereby improving the demodulation performance on the receiving side.

Since an offset $\Delta$ greater than 0 added to the constellation points in the 4 parts of the cross-shaped constellation diagram respectively, the average power of the constellation diagram is larger, in some scenarios a cross-shaped constellation diagram in which an offset Δ is 0 may be used, which will not be specifically limited here.

Example 2

Referring to Fig. 8, which is a cross-shaped constellation diagram provided in Example 2. Taking the value of Δ being equal to $\sqrt{2}-1$ as an example, when the value of $M$ is 2, the first constellation diagram model may be used to modulate 4 bits of information to obtain a modulation symbol. According to the relationship of the number of bits of information carried by the modulation symbol, that is, $N = 2^M$, it is obtained that $N = 4$, such that the first constellation diagram model includes 16 constellation points. Therefore, the cross-shaped constellation diagram shown in Fig. 8 includes 16 constellation points.

The value of $\theta$ is 0, that is, the rotation amount of the cross-shaped constellation diagram is 0, and the constellation points in the cross-shaped constellation diagram are distributed on the x axis and the x axis; and the value of d is 1, i.e., the scaling amount is 1. Therefore, from formula (1), that is, $a_n = (2n - 1 + \Delta)d$, it can be obtained that $a_n = 2n - 2 + \sqrt{2}$. Therefore, n may take the values of 1, 2, 3 or 4 respectively, and it can be obtained that $a_1 = 2 - 2 + \sqrt{2} = \sqrt{2}$, $a_2 = 4 - 2 + \sqrt{2} = 2 + \sqrt{2}$, $a_3 = 6 - 2 + \sqrt{2} = 4 + \sqrt{2}$, $a_4 = 8 - 2 + \sqrt{2} = 6 + \sqrt{2}$. Since $e^{j0} = \cos 0 + j \sin 0 = 1$, $\left| \sqrt{2}e^{j0} - (2 + \sqrt{2})e^{j0} \right| = 2$, it can be determined that a distance between $a_1 e^{j0}$ and $a_2 e^{j0}$ is 2, that is, the distance between adjacent constellation points on the same straight line is 2.

In addition, since $e^{j(0+\pi/2)} = \cos(0 + \pi/2) + j \sin(0 + \pi/2) = j$, $\left| \sqrt{2}e^{j0} - (2 + \sqrt{2})e^{j(0+\pi/2)} \right| = 2$. According to formula (2), i.e., $b_n = a_n + \beta$, when the value of $\beta$ is 0, it can be obtained that $b_n = a_n$, that is $b_n$ and $a_n$ are equal. Therefore, it may be determined that a distance between $a_1 e^{j0}$ and $b_1 e^{j(0+\pi/2)}$ is 2, that is, the distance between the adjacent points of the 4 constellation points closest to the origin is 2. Therefore, the distance between adjacent points of the 4 constellation points closest to the origin is equal to the distance between adjacent constellation points on the same straight line.

It can be seen that when the value of Δ is equal to $\sqrt{2}-1$, the two-dimensional coordinates of the 16 constellation points shown in Fig. 8 are as follows:

$$(\sqrt{2}, 0), (2 + \sqrt{2}, 0), (4 + \sqrt{2}, 0), (6 + \sqrt{2}, 0),$$

$$(-\sqrt{2}, 0), (-2 - \sqrt{2}, 0), (-4 - \sqrt{2}, 0), (-6 - \sqrt{2}, 0),$$

$$(0, \sqrt{2}), (0, 2 + \sqrt{2}), (0, 4 + \sqrt{2}), (0, 6 + \sqrt{2}),$$

$$(0, -\sqrt{2}), (0, -2 - \sqrt{2}), (0, -4 - \sqrt{2}), (0, -6 - \sqrt{2}).$$

In addition, the two-dimensional coordinates of the 16 constellation points may also include the following:

$$(1 + \Delta, 0), (3 + \Delta, 0), (5 + \Delta, 0), (7 + \Delta, 0),$$

$$(-(1 + \Delta), 0), (-(3 + \Delta), 0), (-(5 + \Delta), 0), (-(7 + \Delta), 0),$$

$$(0, 1 + \Delta), (0, 3 + \Delta), (0, 5 + \Delta), (0, 7 + \Delta),$$

$$(0, -(1 + \Delta)), (0, -(3 + \Delta)), (0, -(5 + \Delta)), (0, -(7 + \Delta)).$$

Where, Δ may be expressed by a finite decimal, for example, $\Delta = \sqrt{2} - 1 = 1.141 - 1 = 0.141$ , which will not be specifically limited here.

When the constellation diagram needs to be power-normalized, the constellation diagram as a whole may be multiplied by a normalization factor (scaling factor). That is, each constellation point in the constellation diagram is multiplied by a normalization factor (scaling factor) to obtain a power-normalized constellation diagram.

Example 3

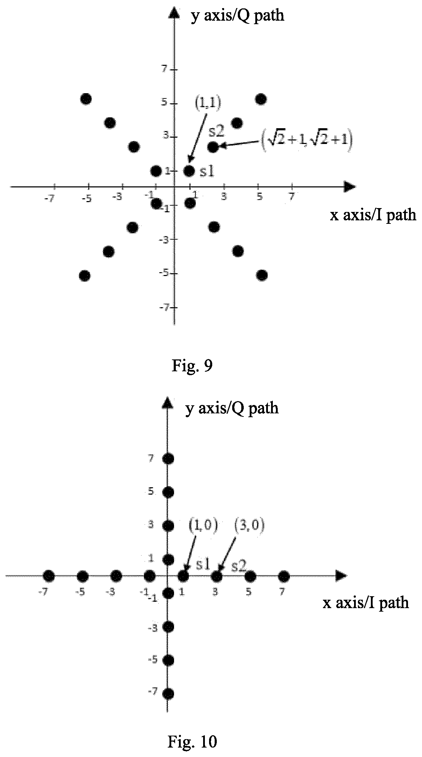

Referring to Fig. 9, which is a cross-shaped constellation diagram provided in Example 3. Taking the value of Δ being equal to $\sqrt{2} - 1$ as an example, when the value of M is 2, the first constellation diagram model may be used to modulate 4 bits of information to obtain a modulation symbol. According to the relationship of the number of bits of information carried by the modulation symbol, that is, $N = 2^M$, it is obtained that $N = 4$, such that the first constellation diagram model includes 16 constellation points. Therefore, the cross-shaped constellation diagram shown in Fig. 9 includes 16 constellation points.

The value of $\theta$ is $\pi/4$, that is, the rotation amount of the cross-shaped constellation diagram is 45°, and the constellation points in the cross-shaped constellation diagram are distributed on a straight line passing through the origin at 45° and a straight line passing through the origin at 135° respectively. The value of d is 1, that is, the scaling amount is 1, so from formula (1), i.e. $a_n = (2n - 1 + \Delta)d$, it is obtained that $a_n = 2n - 2 + \sqrt{2}$ .

Therefore, n may take the values of 1, 2, 3 or 4 respectively, such that $a_1 = 2 - 2 + \sqrt{2} = \sqrt{2}$ , $a_2 = 4 - 2 + \sqrt{2} = 2 + \sqrt{2}$ , $a_3 = 6 - 2 + \sqrt{2} = 4 + \sqrt{2}$ , $a_4 = 8 - 2 + \sqrt{2} = 6 + \sqrt{2}$ , so $a_1 e^{j\pi/4} = \sqrt{2}e^{j\pi/4} = 1 + j$ , and $a_2 e^{j\pi/4} = (2 + \sqrt{2})e^{j\pi/4} = (\sqrt{2} + 1) + j(\sqrt{2} + 1)$ . It can be seen that, when the value of Δ is equal to $\sqrt{2} - 1$ , the two-dimensional coordinates of the 16 constellation points shown in Fig. 9 are as follows:

$$(1,1), (\sqrt{2} + 1, \sqrt{2} + 1), (2\sqrt{2} + 1, 2\sqrt{2} + 1), (3\sqrt{2} + 1, 3\sqrt{2} + 1),$$

$$(-1,1), (-\sqrt{2} - 1, \sqrt{2} + 1), (-2\sqrt{2} - 1, 2\sqrt{2} + 1), (-2\sqrt{2} - 1, 2\sqrt{2} + 1),$$

$$(-1, -1), (-\sqrt{2} - 1, -\sqrt{2} - 1), (-2\sqrt{2} - 1, -2\sqrt{2} - 1), (-2\sqrt{2} - 1, -2\sqrt{2} - 1),$$

$$(1, -1), (\sqrt{2} + 1, -\sqrt{2} - 1), (2\sqrt{2} + 1, -2\sqrt{2} - 1), (2\sqrt{2} + 1, -2\sqrt{2} - 1).$$

Since $\left|\sqrt{2}e^{j\pi/4} - (2 + \sqrt{2})e^{j\pi/4}\right| = 2$, it can be determined that a distance between $a_1 e^{j\pi/4}$ and $a_2 e^{j\pi/4}$ is 2, that is, the distance between adjacent constellation points on the same straight line is 2. In addition, since

$$e^{j(\pi/4+\pi/2)} = \cos(\pi/4 + \pi/2) + j\sin(\pi/4 + \pi/2) = -\frac{\sqrt{2}}{2} + \frac{\sqrt{2}}{2}j$$ ,

$\left|\sqrt{2}e^{j(\pi/4)} - \sqrt{2}e^{j(\pi/4+\pi/2)}\right| = 2$ , and when the value of β is 0, according to formula (2), that is $b_n = a_n + \beta$, it can be obtained that $b_n = a_n$, that is, $b_n$ is equal to $a_n$. Therefore, it can be determined that a distance between $a_1 e^{j\pi/4}$ and $b_1 e^{j(\pi/4+\pi/2)}$ is 2, that is, the distance between the adjacent points among the 4 constellation points closest to the origin is 2. Therefore, the distance between adjacent points among the 4 constellation points closest to the origin is equal to the distance between adjacent constellation points on the same straight line.

In addition, the two-dimensional coordinates of the 16 constellation points may also include the following:

$$\left(\left(\frac{\sqrt{2}}{2}+\Delta\right),\left(\frac{\sqrt{2}}{2}+\Delta\right)\right),\left(\left(\frac{3\sqrt{2}}{2}+\Delta\right),\left(\frac{3\sqrt{2}}{2}+\Delta\right)\right),$$

$$\left(\left(\frac{5\sqrt{2}}{2}+\Delta\right),\left(\frac{5\sqrt{2}}{2}+\Delta\right)\right),\left(\left(\frac{7\sqrt{2}}{2}+\Delta\right),\left(\frac{7\sqrt{2}}{2}+\Delta\right)\right),$$

$$\left(-\left(\frac{\sqrt{2}}{2}+\Delta\right),-\left(\frac{\sqrt{2}}{2}+\Delta\right)\right),\left(-\left(\frac{3\sqrt{2}}{2}+\Delta\right),-\left(\frac{3\sqrt{2}}{2}+\Delta\right)\right),$$

$$\left(-\left(\frac{5\sqrt{2}}{2}+\Delta\right),-\left(\frac{5\sqrt{2}}{2}+\Delta\right)\right),\left(-\left(\frac{7\sqrt{2}}{2}+\Delta\right),-\left(\frac{7\sqrt{2}}{2}+\Delta\right)\right),$$

$$\left(\left(\frac{\sqrt{2}}{2}+\Delta\right),-\left(\frac{\sqrt{2}}{2}+\Delta\right)\right),\left(\left(\frac{3\sqrt{2}}{2}+\Delta\right),-\left(\frac{3\sqrt{2}}{2}+\Delta\right)\right),$$

$$\left(\left(\frac{5\sqrt{2}}{2}+\Delta\right),-\left(\frac{5\sqrt{2}}{2}+\Delta\right)\right),\left(\left(\frac{7\sqrt{2}}{2}+\Delta\right),-\left(\frac{7\sqrt{2}}{2}+\Delta\right)\right),$$

$$\left(-\left(\frac{\sqrt{2}}{2}+\Delta\right),\left(\frac{\sqrt{2}}{2}+\Delta\right)\right),\left(-\left(\frac{3\sqrt{2}}{2}+\Delta\right),\left(\frac{3\sqrt{2}}{2}+\Delta\right)\right),$$

$$\left(-\left(\frac{5\sqrt{2}}{2}+\Delta\right),\left(\frac{5\sqrt{2}}{2}+\Delta\right)\right),\left(-\left(\frac{7\sqrt{2}}{2}+\Delta\right),\left(\frac{7\sqrt{2}}{2}+\Delta\right)\right)$$

Where, $\Delta$ may be expressed by a finite decimal, for example, $\Delta = 1 - \frac{\sqrt{2}}{2} = 1 - 0.707 = 0.293$, which is not specifically limited herein.

When the constellation diagram needs to be power-normalized, the constellation diagram as a whole may be multiplied by a normalization factor (scaling factor), that is, each constellation point in the constellation diagram may be multiplied by a normalization factor (scaling factor) to obtain a power-normalized constellation diagram.

Example 4

Referring to Fig. 10, which is a cross-shaped constellation diagram provided in Example 4. Taking the value of $\Delta$ being equal to 0 as an example, according to formula (1), that is, $a_n = (2n - 1 + \Delta)d$, and the value of d is 1, that is, in the case that the scaling amount is 1, $a_n = 2n - 1$, where the distance between adjacent constellation points on the same straight line is 2. When the value of $M$ is 2, that is, the first constellation diagram model may be used to modulate 4 bits of information to obtain a modulation symbol. According to the relationship of the number of bits of information carried by the modulation symbol, that is, $N = 2^M$, $N = 4$ is correspondingly obtained, such that the first constellation diagram model includes 16 constellation points, where the number of $\theta$ is zero, that is, the rotation amount of the cross-shaped constellation diagram is 0. The constellation points in the cross-shaped constellation diagram are distributed on the x axis and the y axis, that is, $e^{j0}$ = cos 0 + j sin 0 = 1 , $e^{j(0+\pi/2)}$ = cos(0 + $\pi$/2) + j sin(0 + $\pi$/2) = $j$, $e^{j(0+\pi)}$ = cos(0 + $\pi$) + j sin(0 + $\pi$) = -1 , $e^{j(0+3\pi/2)}$ = cos(0 + 3$\pi$/2) + j sin(0 + 3$\pi$/2) = -$j$ . Therefore, the two-dimensional coordinates of the 16 constellation points may include the following:

(1,0), (3,0), (5,0), (7,0),
(-1,0), (3,0), (-5,0), (-7,0),
(0,1), (0,3), (0,5), (0,7),
(0, -1), (0, -3), (0, -5), (0, -7).

Therefore, the first constellation diagram model may be a cross-shaped constellation diagram including 16 constellation points as shown in Fig. 10. When the constellation diagram needs to be power-normalized, this constellation diagram as a whole may be multiplied by a normalization factor (scaling factor), such as *1/sqrt(84).* That is, each constellation point in this constellation diagram is multiplied by a normalization factor (scaling factor) to obtain a power-normalized constellation diagram.

Example 5

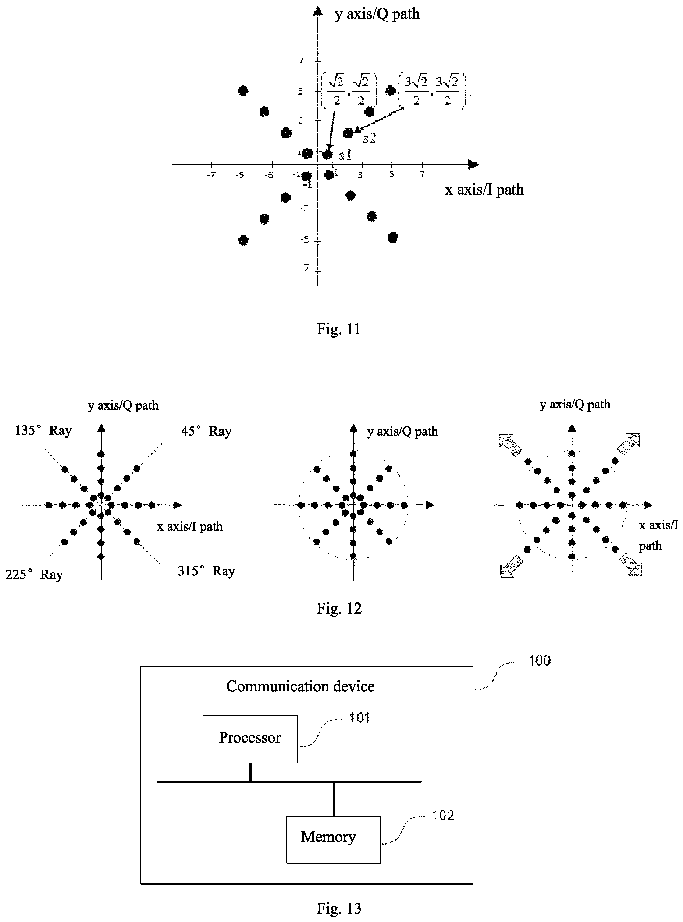

Referring to Fig. 11, which is a cross-shaped constellation diagram provided in Example 5. Taking the value of $\Delta$ being equal to 0 as an example, according to formula (1), that is, $a_n = (2n - 1 + \Delta)d$, and the value of d is 1, that is, in the case that the scaling amount is 1, $a_n = 2n - 1$, where the distance between adjacent constellation points on the same straight line is 2. When the value of *M* is 2, that is, the first constellation diagram model may be used to modulate 4 bits of information to obtain a modulation symbol. According to the relationship of the number of bits of information carried by the modulation symbol, that is, $N = 2^M$, $N = 4$ is obtained accordingly, such that the first constellation diagram model includes 16 constellation points, where the value of $\theta$ is $\pi$/4, that is, the rotation amount of the cross-shaped constellation diagram is 45°. The constellation points in the cross-shaped constellation diagram are respectively distributed on the straight line passing through the origin at 45° and the straight line passing through the origin at 135°. Therefore, the first constellation diagram model may be a cross-shaped constellation diagram including 16 constellation points as shown in Fig. 11, where the two-dimensional coordinates corresponding to the 16 constellation points may include the following:

$$\left(\frac{\sqrt{2}}{2},\frac{\sqrt{2}}{2}\right),\left(\frac{3\sqrt{2}}{2},\frac{3\sqrt{2}}{2}\right),\left(\frac{5\sqrt{2}}{2},\frac{5\sqrt{2}}{2}\right),\left(\frac{7\sqrt{2}}{2},\frac{7\sqrt{2}}{2}\right),$$

$$\left(-\frac{\sqrt{2}}{2},-\frac{\sqrt{2}}{2}\right),\left(-\frac{3\sqrt{2}}{2},-\frac{3\sqrt{2}}{2}\right),\left(-\frac{5\sqrt{2}}{2},-\frac{5\sqrt{2}}{2}\right),\left(-\frac{7\sqrt{2}}{2},-\frac{7\sqrt{2}}{2}\right),$$

$$\left(\frac{\sqrt{2}}{2},-\frac{\sqrt{2}}{2}\right),\left(\frac{3\sqrt{2}}{2},-\frac{3\sqrt{2}}{2}\right),\left(\frac{5\sqrt{2}}{2},-\frac{5\sqrt{2}}{2}\right),\left(\frac{7\sqrt{2}}{2},-\frac{7\sqrt{2}}{2}\right),$$

$$\left(-\frac{\sqrt{2}}{2},\frac{\sqrt{2}}{2}\right),\left(-\frac{3\sqrt{2}}{2},\frac{3\sqrt{2}}{2}\right),\left(-\frac{5\sqrt{2}}{2},\frac{5\sqrt{2}}{2}\right),\left(-\frac{7\sqrt{2}}{2},\frac{7\sqrt{2}}{2}\right).$$

When the constellation diagram needs to be power-normalized, the constellation diagram as a whole may be multiplied by a normalization factor (scaling factor), such as 1/sqrt(84), that is, each constellation point in the constellation diagram is multiplied by a normalization factor (scaling factor) to obtain a power-normalized constellation diagram. It should be appreciated that the coordinates corresponding to each constellation point in the first constellation diagram model may include the following:

$$(a_1 \cos\theta , a_1 \sin\theta), (a_2 \cos\theta , a_2 \sin\theta), \cdots , (a_N \cos\theta , a_N \sin\theta),$$

$$(b_1 \cos(\theta + \pi/2), b_1 \sin(\theta + \pi/2)), (b_2 \cos(\theta + \pi/2), b_2 \sin(\theta + \pi/2)), \cdots,$$

$$\left(b_N \cos\left(\theta + \frac{\pi}{2}\right), b_N \sin\left(\theta + \frac{\pi}{2}\right)\right),$$

$$(a_1 \cos(\theta + \pi), a_1 \sin(\theta + \pi)), (a_2 \cos(\theta + \pi), a_2 \sin(\theta + \pi)), \cdots,$$

$$(a_N \cos(\theta + \pi), a_N \sin(\theta + \pi)),$$

$$(b_1 \cos(\theta + 3\pi/2), b_1 \sin(\theta + 3\pi/2)), (b_2 \cos(\theta + 3\pi/2), b_2 \sin(\theta + 3\pi/2)), \cdots,$$

$$(b_N \cos(\theta + 3\pi/2), b_N \sin(\theta + 3\pi/2)).$$

The above coordinates may be obtained as follows according to a trigonometric function formula:

$$(a_1 \cos\theta, a_1 \sin\theta), (a_2 \cos\theta, a_2 \sin\theta), \cdots, (a_N \cos\theta, a_N \sin\theta)$$

$$(-b_1 \sin\theta, b_1 \cos\theta), (-b_2 \sin\theta, b_2 \cos\theta), \cdots, (-b_N \sin\theta, b_N \cos\theta)$$

$$(-a_1 \cos\theta, -a_1 \sin\theta), (-a_2 \cos\theta, -a_2 \sin\theta), \cdots, (-a_N \cos\theta, -a_N \sin\theta)$$

$$(b_1 \sin\theta, -b_1 \cos\theta), (b_2 \sin\theta, -b_2 \cos\theta), \cdots, (b_N \sin\theta, -b_N \cos\theta).$$

When the value of $\beta$ is 0, $b_n = a_n$ may be obtained, and the coordinates corresponding to each constellation point in the first constellation diagram model may include the following:

$$(a_1 \cos\theta, a_1 \sin\theta), (a_2 \cos\theta, a_2 \sin\theta), \cdots, (a_N \cos\theta, a_N \sin\theta),$$

$$(a_1 \cos(\theta + \pi/2), a_1 \sin(\theta + \pi/2)), (a_2 \cos(\theta + \pi/2), a_2 \sin(\theta + \pi/2)), \cdots,$$

$$\left(a_N \cos\left(\theta + \frac{\pi}{2}\right), a_N \sin\left(\theta + \frac{\pi}{2}\right)\right),$$

$$(a_1 \cos(\theta + \pi), a_1 \sin(\theta + \pi)), (a_2 \cos(\theta + \pi), a_2 \sin(\theta + \pi)), \cdots,$$

$$(a_N \cos(\theta + \pi), a_N \sin(\theta + \pi)),$$

$$(a_1 \cos(\theta + 3\pi/2), a_1 \sin(\theta + 3\pi/2)), (a_2 \cos(\theta + 3\pi/2), a_2 \sin(\theta + 3\pi/2)), \cdots,$$

$$(a_N \cos(\theta + 3\pi/2), a_N \sin(\theta + 3\pi/2)).$$

The above coordinates may be obtained as follows according to a trigonometric function formula:

$$(a_1 \cos\theta, a_1 \sin\theta), (a_2 \cos\theta, a_2 \sin\theta), \cdots, (a_N \cos\theta, a_N \sin\theta)$$

$$(-a_1 \sin\theta, a_1 \cos\theta), (-a_2 \sin\theta, a_2 \cos\theta), \cdots, (-a_N \sin\theta, a_N \cos\theta)$$

$$(-a_1 \cos\theta, -a_1 \sin\theta), (-a_2 \cos\theta, -a_2 \sin\theta), \cdots, (-a_N \cos\theta, -a_N \sin\theta)$$

$$(a_1 \sin\theta, -a_1 \cos\theta), (a_2 \sin\theta, -a_2 \cos\theta), \cdots, (a_N \sin\theta, -a_N \cos\theta),$$

where the trigonometric function formula includes the following:

$$\cos(\theta + \pi/2) = -\sin\theta$$

$$\sin(\theta + \pi/2) = \cos\theta$$

$$\cos(\theta + \pi) = -\cos\theta$$

$$\sin(\theta + \pi) = -\sin\theta$$

$$\cos(\theta + 3\pi/2) = \sin\theta$$

$$\sin(\theta + 3\pi/2) = -\cos\theta.$$

It is worth noting that when the value of $\theta$ is 0, that is, the rotation amount of the cross-shaped constellation diagram is 0, the constellation points in the cross-shaped constellation diagram are distributed on the x axis and the y axis. Therefore, the coordinates corresponding to each constellation point in the first constellation diagram model may include the following:

$$(a_1, 0), (a_2, 0), \cdots, (a_N, 0),$$

$$(0, b_1), (0, b_2), \cdots, (0, b_N),$$

$$(-a_1, 0), (-a_2, 0), \cdots, (-a_N, 0),$$

$$(0, -b_1), (0, -b_2), \cdots, (0, -b_N).$$

When the value of $\beta$ is 0, $b_n = a_n$ can be obtained, and the coordinates corresponding to each constellation point in the first constellation diagram model may include the following:

$$(a_1, 0), (a_2, 0), \cdots, (a_N, 0),$$

$$(0, a_1), (0, a_2), \cdots, (0, a_N),$$

$$(-a_1, 0), (-a_2, 0), \cdots, (-a_N, 0),$$

$$(0, -a_1), (0, -a_2), \cdots, (0, -a_N).$$

It is worth noting that when the value of $\theta$ is $\pi/4$, that is, the rotation amount of the cross-shaped constellation diagram is 45°, the constellation points in the cross-shaped constellation diagram are respectively distributed on the straight line passing through the origin at 45° and the straight line passing through the origin at 135°. Therefore, the coordinates corresponding to each constellation point in the first constellation diagram model may include the following:

$$\left(\frac{\sqrt{2}}{2}a_1, \frac{\sqrt{2}}{2}a_1\right), \left(\frac{\sqrt{2}}{2}a_2, \frac{\sqrt{2}}{2}a_2\right), \cdots, \left(\frac{\sqrt{2}}{2}a_N, \frac{\sqrt{2}}{2}a_N\right),$$

$$\left(-\frac{\sqrt{2}}{2}b_1, \frac{\sqrt{2}}{2}b_1\right), \left(-\frac{\sqrt{2}}{2}b_2, \frac{\sqrt{2}}{2}b_2\right), \cdots, \left(-\frac{\sqrt{2}}{2}b_N, \frac{\sqrt{2}}{2}b_N\right),$$

$$\left(-\frac{\sqrt{2}}{2}a_1, -\frac{\sqrt{2}}{2}a_1\right), \left(-\frac{\sqrt{2}}{2}a_2, -\frac{\sqrt{2}}{2}a_2\right), \cdots, \left(-\frac{\sqrt{2}}{2}a_N, -\frac{\sqrt{2}}{2}a_N\right),$$

$$\left(\frac{\sqrt{2}}{2}b_1, -\frac{\sqrt{2}}{2}b_1\right), \left(\frac{\sqrt{2}}{2}b_2, -\frac{\sqrt{2}}{2}b_2\right), \cdots, \left(\frac{\sqrt{2}}{2}b_N, -\frac{\sqrt{2}}{2}b_N\right).$$

When the value of $\beta$ is 0, $b_n = a_n$ may be obtained, and the coordinates corresponding to each constellation point in the first constellation diagram model may include the following:

$$\left(\frac{\sqrt{2}}{2}a_1, \frac{\sqrt{2}}{2}a_1\right), \left(\frac{\sqrt{2}}{2}a_2, \frac{\sqrt{2}}{2}a_2\right), \cdots, \left(\frac{\sqrt{2}}{2}a_N, \frac{\sqrt{2}}{2}a_N\right),$$

$$\left(-\frac{\sqrt{2}}{2}a_1, \frac{\sqrt{2}}{2}a_1\right), \left(-\frac{\sqrt{2}}{2}a_2, \frac{\sqrt{2}}{2}a_2\right), \cdots, \left(-\frac{\sqrt{2}}{2}a_N, \frac{\sqrt{2}}{2}a_N\right),$$

$$\left(-\frac{\sqrt{2}}{2}a_1, -\frac{\sqrt{2}}{2}a_1\right), \left(-\frac{\sqrt{2}}{2}a_2, -\frac{\sqrt{2}}{2}a_2\right), \cdots, \left(-\frac{\sqrt{2}}{2}a_N, -\frac{\sqrt{2}}{2}a_N\right),$$

$$\left(\frac{\sqrt{2}}{2}a_1, -\frac{\sqrt{2}}{2}a_1\right), \left(\frac{\sqrt{2}}{2}a_2, -\frac{\sqrt{2}}{2}a_2\right), \cdots, \left(\frac{\sqrt{2}}{2}a_N, -\frac{\sqrt{2}}{2}a_N\right).$$

Example 6

Referring to Fig. 12, which is a schematic diagram of a second constellation diagram model provided in an embodiment of the present disclosure. In the case of $M = 2$, a modulation symbol is obtained by modulating 5 bits of information in a data packet according to the second constellation diagram model, and $N = 4$ is obtained accordingly from $N = 2^M$. Therefore, the second constellation diagram model is a star-shaped constellation diagram including 32 constellation points. The constellation points in the star-shaped constellation diagram shown on the left side of Fig. 12 are respectively distributed on a straight line passing through the x axis (i.e., I path) (including a ray of a positive semi-axis and a ray of a negative semi-axis), a straight line passing through the y axis (i.e., Q path) (including the ray of the positive semi-axis and the ray of the negative semi-axis), a ray passing through the origin at 45°, a ray passing through the origin at 135°, a ray passing through the origin at 225°, and a ray passing through the origin at 315°. For the second constellation diagram model, in the case of $b_n = a_n$, a star-shaped constellation diagram as shown in the middle diagram of Fig. 12 may be formed; and in the case of $b_n = a_n + \beta$, a star-shaped constellation diagram as shown in the right diagram of Fig. 12 may be formed.

It should be appreciated that the star-shaped constellation diagram shown on the right diagram of Fig. 12 may be formed by expanding amplitudes of constellation points of 4 arms (rays passing through the origin at 45°, at 135°, at 225°, and at 315°) in the star-shaped constellation diagram shown in the middle diagram of Fig. 12 outward as a whole. Therefore, the constellation points in the star-shaped constellation diagram can be more evenly distributed to improve the demodulation performance, but will increase the average power of the constellation diagram. Therefore, in some scenarios, a second constellation diagram model with a single-arm additional offset $\beta$ being 0 may also be used, which will not be specifically limited.

It is worth noting that the numerical values shown in the embodiments of the present disclosure are for illustrative description only and are not specifically limited. The values can be adaptively adjusted according to actual conditions.

It should be appreciated that information in the information transmission in all the above embodiments refers to information in a broad sense, that is, the information may be service data or information (i.e., signaling) used for system control. Alternatively, the information may include bit data that needs to be transmitted, such as service bit data or signaling bit data, where different English expressions such as message, information and payload may all represent information.

It should be appreciated that the receiving side in all the above embodiments may be a base station, a receiver, an access point, etc., which will not be specifically limited.

In addition, referring to Fig. 13, in an embodiment of the present disclosure further provided is a communication device. The communication device 100 includes a memory 102, a processor 101, and a computer program which is stored in the memory 102 and executable on the processor 101.

The processor 101 and the memory 102 may be connected via a bus or other means.

The memory 102 is a non-transitory computer-readable storage medium that may be used to store a non-transitory software program and a non-transitory computer executable program. In addition, the memory 102 may include a high-speed random access memory and also a non-volatile memory, such as at least one disk storage device, a flash memory device, or other non-volatile solid-state storage devices. In some implementations, the memory 102 may optionally include a memory remotely located relative to the processor 101. These remote memories may be connected to the processor 101 via a network. Examples of the above-mentioned network include, but are not limited to, the Internet, an intranet, a local area network, a mobile communication network and combinations thereof.

The non-transient software program and instructions required to implement the signal modulation method of the above embodiment are stored in the memory 102. When executed by the processor 101, the signal modulation method of the above embodiment is executed, for example, the method step S110 in Fig. 2 described above is executed.

The device embodiments described above are merely illustrative, where the units described as separate components may or may not be physically separated, that is, may be located in a single place, or may be distributed over multiple network units. Some or all of the modules may be selected according to actual needs to achieve the purpose of the solution in the present embodiment.

In addition, in an embodiment of the present disclosure further provided is a computer-readable storage medium storing computer-executable instructions therein, where the computer-executable instructions are executed by a processor or controller, for example, by one processor in the above-mentioned device embodiment, such that the above-mentioned processor can execute the signal modulation method in the above-mentioned embodiment and execute the step S110 of the method in Fig. 2 described above.

In addition, in an embodiment of the present disclosure further provided is a computer program product, which includes a computer program or computer instructions, where the computer program or computer instructions are stored in a computer-readable storage medium, the processor of a computer device reads the computer program or computer instructions from the computer-readable storage medium, and the processor executes the computer program or computer instructions, such that the computer device executes the signal modulation method in the above embodiment, for example, executes the step S110 of the method in Fig. 2 described above.

Those of ordinary skill in the art will appreciate that all or some of the steps and systems in the methods disclosed above may be implemented as software, firmware, hardware, or a suitable combination thereof. Some or all of the physical components may be implemented as software executed by a processor, such as a central processing unit, a digital signal processor or a microprocessor, or as hardware, or as an integrated circuit, such as an application specific integrated circuit. Such software may be distributed on a computer-readable medium, which may include a computer storage medium (or non-transitory medium) and a communication medium (or transitory medium). As is known to a person of ordinary skill in the art, the term "computer storage medium" includes volatile and nonvolatile, removable and non-removable media implemented in any method or technology for storage of information such as computer readable instructions, data structures, program modules or other data. The computer storage media includes, but are not limited to, RAM, ROM, EEPROM, a flash memory or other memory technology, CD-ROM, a digital versatile disk (DVD) or other optical disk storage, a magnetic cassette, a magnetic tape, magnetic disk storage or other magnetic storage devices, or any other medium that can be used to store the desired information and which can be accessed by a computer. Furthermore, it is well known to those of ordinary skill in the art that the communication media typically include computer readable instructions, data structures, program modules, or other data in a modulated data signal such as a carrier wave or other transport mechanism, and may include any information delivery media.

**Claims**

1. A signal modulation method, comprising:

   modulating M + 2 bits of information according to a first constellation diagram model, or modulating M + 3 bits of information according to a second constellation diagram model, to obtain modulation symbols, wherein the first constellation diagram model comprises 4 ∗ N constellation points, the second constellation diagram model comprise 8 ∗ N constellation points, M is an integer greater than 1, and N and M satisfy a formula N = $2^M$;

   a complex number form corresponding to the 4*N constellation points in the first constellation diagram model comprises the following:

$$a_1 e^{j\theta}, a_2 e^{j\theta}, \cdots, a_N e^{j\theta},$$

$$b_1 e^{j(\theta+\pi/2)}, b_2 e^{j(\theta+\pi/2)}, \cdots, b_N e^{j(\theta+\pi/2)},$$

$$a_1 e^{j(\theta+\pi)}, a_2 e^{j(\theta+\pi)}, \cdots, a_N e^{j(\theta+\pi)},$$

$$b_1 e^{j(\theta+3\pi/2)}, b_2 e^{j(\theta+3\pi/2)}, \cdots, b_N e^{j\left(\theta+\frac{3\pi}{2}\right)};$$

   a complex number form corresponding to the 8*N constellation points in the second constellation diagram model comprises the following:

$$a_1 e^{j\theta}, a_2 e^{j\theta}, \cdots, a_N e^{j\theta},$$

$$b_1 e^{j\left(\theta+\frac{\pi}{4}\right)}, b_2 e^{j\left(\theta+\frac{\pi}{4}\right)}, \cdots, b_N e^{j\left(\theta+\frac{\pi}{4}\right)},$$

$$a_1 e^{j\left(\theta+\frac{\pi}{2}\right)}, a_2 e^{j\left(\theta+\frac{\pi}{2}\right)}, \cdots, a_N e^{j\left(\theta+\frac{\pi}{2}\right)},$$

$$b_1 e^{j\left(\theta+\frac{3\pi}{4}\right)}, b_2 e^{j\left(\theta+\frac{3\pi}{4}\right)}, \cdots, b_N e^{j\left(\theta+\frac{3\pi}{4}\right)},$$

$$a_1 e^{j(\theta+\pi)}, a_2 e^{j(\theta+\pi)}, \cdots, a_N e^{j(\theta+\pi)},$$

$$b_1 e^{j\left(\theta+\frac{5\pi}{4}\right)}, b_2 e^{j\left(\theta+\frac{5\pi}{4}\right)}, \cdots, b_N e^{j\left(\theta+\frac{5\pi}{4}\right)},$$

$$a_1 e^{j\left(\theta+\frac{3\pi}{2}\right)}, a_2 e^{j\left(\theta+\frac{3\pi}{2}\right)}, \cdots, a_N e^{j\left(\theta+\frac{3\pi}{2}\right)},$$

$$b_1 e^{j\left(\theta+\frac{7\pi}{4}\right)}, b_2 e^{j\left(\theta+\frac{7\pi}{4}\right)}, \cdots, b_N e^{j\left(\theta+\frac{7\pi}{4}\right)};$$

   wherein $\pi$ is a symbol for Pi, j is an imaginary number and equal to $\sqrt{-1}$, e is a natural logarithm, e is a real number, and, $a_1, a_2, \cdots, a_N, b_1, b_2, \cdots, b_N$ are all positive numbers and satisfy: $0 < a_1 < a_2 < \cdots < a_N$, $0 < b_1 < b_2 < \cdots < b_N$.

2. The method according to claim 1, wherein:
   $a_1, a_2, \cdots, a_N$ may be expressed by the following formula:

$$a_n = (2n - 1 + \Delta)d;$$

   $b_1, b_2, \cdots, b_N$ may be expressed by the following formula:

$$b_n = a_n + \beta;$$

   and
   wherein a value of n comprises $1, 2, \cdots, N$; $d$ is a positive real number, and $\Delta$ and $\beta$ are both real numbers greater than or equal to 0.

3. The method according to claim 2, wherein a value of $\Delta$ is $\sqrt{2} - 1$.

4. The method according to claim 3, wherein a value of d is 1, such that $a_n$ satisfies $a_n = 2n - 2 + \sqrt{2}$; or the value of d is 1/2, such that $a_N$ satisfies $a_n = n - 1 + \sqrt{2}/2$.

5. The method according to claim 2, wherein the value of $\Delta$ is 1, and the value of d is 1/2, such that $a_n$ satisfies $a_n = n$.

6. The method according to claim 2, wherein the value of $\Delta$ is 3, and the value of d is 1/2, such that $a_n$ satisfies $a_n = n + 1$.

7. The method according to claim 2, wherein the value of $\Delta$ is 0, and the value of d is 1, such that $a_n$ satisfies $a_n = 2n - 1$.

8. The method according to claim 2, wherein $\beta$ is equal to 0.

9. The method according to claim 2, wherein when the modulation symbol is modulated according to the second constellation model, $\beta$ is greater than 0.

10. The method according to claim 2, wherein:

    when the modulation symbol is modulated according to the first constellation diagram model, the value of d is a value that makes an average power of the modulation symbol modulated by using the first constellation diagram model be equal to 1; or
    when the modulation symbol is modulated according to the second constellation model, the value of d is a value that makes the average power of the modulation symbol modulated by using the second constellation diagram model be equal to 1.

11. The method according to claim 1, wherein:

    a value of $\theta$ is 0; or
    the value of $\theta$ satisfies a formula $\theta = \pi/4$; or
    the value of $\theta$ satisfies a formula $\theta = \pi/8$.

12. A communication device, comprising:

    at least one processor; and
    at least one memory configured to store at least one program; wherein
    when executed by the at least one processor, the at least one program causes the at least one processor to carry out the signal modulation method according to any one of claims 1 to 11.

13. A computer-readable storage medium, storing computer-executable instructions, wherein the computer-executable instructions are configured to perform the signal modulation method according to any one of claims 1 to 11.

Fig. 1(a)          Fig. 1(b)

Modulate M+2 bits of information according to a first constellation
diagram model, or modulate M+3 bits of information according to a
second constellation diagram model, to obtain modulation symbols

S110

Fig. 2

Fig. 3

Fig. 4

Fig. 5

Fig. 6

Fig. 7

Fig. 8

Fig. 9

Fig. 10

Fig. 11

Fig. 12

Fig. 13

## INTERNATIONAL SEARCH REPORT

| International application No. |
| --- |
| **PCT/CN2023/134404** |

| A. | CLASSIFICATION OF SUBJECT MATTER |
| --- | --- |

H04L27/34(2006.01)i

According to International Patent Classification (IPC) or to both national classification and IPC

| B. | FIELDS SEARCHED |
| --- | --- |

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS; CNTXT; VEN; ENTXT; ENTXTC; 3GPP: 星座模型, 星座点, 复数, 调制, 比特, 符号, 圆周率, 实数, 虚数, 对数, constellation model, constellation point, complex number, modulation, bit, symbol, turnaround rate, real number, imaginary number, logarithm

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 115208735 A (ZTE CORP.) 18 October 2022 (2022-10-18)<br>entire document | 1-13 |
| A | CN 102045293 A (SHENZHEN ABESTECH INDUSTRY CO., LTD.) 04 May 2011 (2011-05-04)<br>entire document | 1-13 |
| A | US 6744827 B1 (CIT ALCATEL) 01 June 2004 (2004-06-01)<br>entire document | 1-13 |

☐ Further documents are listed in the continuation of Box C.          ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **26 February 2024** | **27 February 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/134404**

| Patent document cited in search report | | | Publication date (day/month/year) | Patent family member(s) | | | Publication date (day/month/year) |
|---|---|---|---|---|---|---|---|
| CN | 115208735 | A | 18 October 2022 | None | | | |
| CN | 102045293 | A | 04 May 2011 | None | | | |
| US | 6744827 | B1 | 01 June 2004 | AU | 6536699 | A | 06 July 2000 |
| | | | | EP | 1017201 | A1 | 05 July 2000 |
| | | | | SG | 99296 | A1 | 27 October 2003 |
| | | | | JP | 2000201193 | A | 18 July 2000 |
| | | | | CA | 2292859 | A1 | 29 June 2000 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211520120